(19) Europäisches Patentamt European Patent Office Office européen des brevets

(11) **EP 4 507 037 A1**

(12) **EUROPEAN PATENT APPLICATION**
published in accordance with Art. 153(4) EPC

(43) Date of publication:
**12.02.2025 Bulletin 2025/07**

(21) Application number: **22965432.2**

(22) Date of filing: **15.11.2022**

(51) International Patent Classification (IPC):
*H01M 4/62* (2006.01)    *H01M 4/13* (2010.01)
*H01M 4/139* (2010.01)

(52) Cooperative Patent Classification (CPC):
H01M 4/13; H01M 4/139; H01M 4/62

(86) International application number:
**PCT/CN2022/131829**

(87) International publication number:
**WO 2024/103239 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central, Central And Western District (HK)**

(72) Inventors:
• **FENG, Nianyun**
  **Ningde, Fujian 352100 (CN)**

• **PEI, Zhenxing**
  **Ningde, Fujian 352100 (CN)**
• **NIU, Congsu**
  **Ningde, Fujian 352100 (CN)**
• **WEI, Kaining**
  **Ningde, Fujian 352100 (CN)**
• **LI, Xiaowei**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **NEGATIVE ELECTRODE SHEET AND PREPARATION METHOD THEREFOR, SECONDARY BATTERY, AND ELECTRIC DEVICE**

(57)    The present application provides a negative electrode plate, a method of preparing the same, a secondary battery, and an electrical device. The negative electrode plate includes a negative electrode current collector and a negative electrode active material layer provided on the negative electrode current collector, wherein the negative electrode active material layer includes a negative electrode active material and an additive, the additive includes a shell wall and a cavity located on an inner side of the shell wall, a thickness of the shell wall is denoted as d, a volume of the cavity is denoted as $V_h$, a volume of the additive is denoted as $V_w$, and the additive satisfies $20nm \leq d \leq 300nm$ and $40\% \leq V_h/V_w \leq 90\%$. The present application can effectively reduce the expansion force of secondary batteries and improve the safety performances of secondary batteries.

5

**Fig. 2**

# EP 4 507 037 A1

## Description

## TECHNICAL FIELD

The present application relates to the field of batteries, in particular to a negative electrode plate and a method for preparing the same, a secondary battery, and an electrical device.

## BACKGROUND

In recent years, secondary batteries have been widely used in energy storage power systems for hydro, thermal, wind and solar power stations, as well as in a variety of fields such as power tools, electric bicycles, electric motorcycles, electric vehicles, military equipment, aerospace and so on. With the application and promotion of secondary batteries, their safety performance has received more and more attention. If the safety performance of the secondary batteries cannot be guaranteed, then they cannot be adopted. Therefore, how to enhance the safety performance of secondary batteries is a technical problem that needs to be solved urgently.

## SUMMARY

An object of the present application is to provide a negative electrode plate, a method for preparing the same, a secondary battery and an electrical device, which can effectively reduce an expansion force of the secondary battery adopting the same and improve safety performance of the secondary battery adopting the same.

A first aspect of the present application provides a negative electrode plate comprising a negative electrode current collector and a negative electrode active material layer provided on the negative electrode current collector, wherein the negative electrode active material layer comprises a negative electrode active material and an additive, the additive comprises a shell wall and a cavity located on an inner side of the shell wall, and wherein a thickness of the shell wall is denoted as d, a volume of the cavity is denoted as $V_h$, a volume of the additive is denoted as $V_w$, and the additive satisfies $20\,nm \leq d \leq 300\,nm$ and $40\% \leq V_h/V_w \leq 90\%$.

When the additive satisfies $20\,nm \leq d \leq 300\,nm$ and $40\% \leq V_h/V_w \leq 90\%$ both, on the one hand, the additive having a larger cavity structure enables it to undergo a larger elastic deformation, which in turn can effectively slow down the negative effect caused by an expansion of the negative electrode, and on the other hand, the additive has a higher structural stability, so that no crushing or pulverization problem will occur when the additive undergoes a larger elastic deformation. Therefore, the present application is able to realize effective reduction of the expansion force of the secondary battery and improvement of the safety performance of the secondary battery under the premise that the additive is present in a small amount and the energy density is not affected.

In any embodiment of the present application, $25\,nm \leq d \leq 200\,nm$, optionally, $40\,nm \leq d \leq 120\,nm$. As a favorable result, the structural stability of the additive is enhanced and the strain of the additive keeps stable, thus better slowing down the negative effect produced by expansion of the negative electrode, so that it is possible to effectively reduce the expansion force of the secondary battery and improve the safety performance of the secondary battery under the premise that the additive is present in a small amount and the energy density is not affected.

In any embodiment of the present application, $60\% \leq V_h/V_w \leq 90\%$, optionally, $70\% \leq V_h/V_w \leq 89\%$. As a favorable result, the additive has a large elastic deformation and provides a buffer space for expansion of particles of the negative electrode active material, thus better slowing down the negative effect produced by expansion of the negative electrode, so that it is possible to effectively reduce the expansion force of the secondary battery and improve the safety performance of the secondary battery under the premise that the additive is present in a small amount and the energy density is not affected.

In any embodiment of the present application, the thickness d of the shell wall of the additive, the volume $V_h$ of the cavity of the additive, and the volume $V_w$ of the additive are tested and obtained by the following method. A circular sample of 0.5 cm in diameter is cut from the negative electrode plate, and a TEM image is obtained through a transmission electron microscope for the cross-section thereof, from which thicknesses of shell wall of the additive and volume particle sizes of the additive are counted in the region to obtain a cumulative distribution curve of the thicknesses of the shell wall of the additive and the volume particle sizes of the additive. The thickness corresponding to a percentage of 50% on the cumulative distribution curve is denoted as the thickness d of the shell wall of the additive, and the volume particle size corresponding to a percentage of 50% on the cumulative distribution curve is denoted as the volume particle size Dv50 of the additive, and according to the formula for an ideal sphere and taking the above obtained volume particle size Dv50 as a diameter, the volume $V_w$ of the additive is obtained through calculation based on the formula $V_w = (4/3) \times \pi \times (Dv50/2)^3$, and the volume $V_h$ of the cavity of the additive $V_h = (4/3) \times \pi \times (Dv50/2-d)^3$.

In any embodiment of the present application, the additive comprises one or more selected from hollow spheres and hollow polyhedrons, optionally comprises hollow spheres.

In any embodiment of the present application, the additive has a Dv50 volume particle size of from 0.85 $\mu$m to 5 $\mu$m, optionally from 1 $\mu$m to 2.5 $\mu$m. As a result, on the one hand, the expansion force of the secondary battery can be effectively reduced and the safety performance can be improved, and on the other hand, the secondary battery can be ensured to have a good cycle performance and a rate performance.

In any embodiment of the present application, the additive has a volume particle size satisfying $0.5 \leq$ (Dv90-Dv10)/Dv50 $\leq$ 8, optionally, $2 \leq$ (Dv90-Dv10)/Dv50 $\leq$ 5.

In any embodiment of the present application, the additive comprises hollow carbon spheres, optionally comprising one or more selected from amorphous hollow carbon spheres, graphitized hollow carbon spheres and hollow graphene spheres. As a result, the negative effect generated by expansion of the negative electrode plate can be better mitigated, so that it is possible to effectively reduce the expansion force of the secondary battery and improve the safety performance of the secondary battery under the premise that the additive is present in a small amount and the energy density is not affected.

In any embodiment of the present application, based on the total weight of the negative electrode active material layer, the additive is present in a weight percent content of from 0.01 wt% to 3 wt%, optionally from 0.1 wt% to 2 wt%. In the present application, it is possible to effectively reduce the expansion force of the secondary battery and improve the safety performance of the secondary battery under the premise that the additive is present in a small amount and the energy density is not affected.

In any embodiment of the present application, the negative electrode active material layer comprises a first portion and a second portion located on the edge side and a third portion located between the first portion and the second portion along a width direction of the negative electrode active material layer, and a total width of the negative electrode active material layer is W in which the first portion has a width of 1/5 W, the second portion has a width of 1/5 W, the third portion has a width of 3/5 W, the additive in the first portion is present in a weight percent content of $w_1$, the additive in the second portion is present in a weight percent content of $w_2$, and the additive in the third portion is present in a weight percent content of $w_3$, and $0 \leq w_1/w_3 < 1$, and $0 \leq w_2/w_3 < 1$. By further adjusting the distribution of the additive in the width direction of the negative electrode active material layer, and setting a high content of the additive in the third portion, and a low content of the additive in the first portion and the second portion, it is possible to effectively reduce the expansion force of the secondary battery and improve the safety performance of the secondary battery, and it is possible to further reduce the amount of the additive and increase the energy density of the secondary battery under the premise that same improvement of the expansion force can be achieved.

In any embodiment of the present application, 0 < w1/w3 $\leq$ 0.7, optionally, $0 \leq w_1/w_3 \leq 0.5$.

In any embodiment of the present application, 0 < w2/w3 $\leq$ 0.7, optionally, $0 \leq w_2/w_3 \leq 0.5$.

By further adjusting the ratio between the amount of the additive in the first portion and/or the second portion and the amount of the additive in the third portion to be within the above range, it is possible to effectively reduce the expansion force of the secondary battery and improve the safety performance of the secondary battery under the premise that the amount of the additive is further reduced.

In any embodiment of the present application, Owt% $\leq w_1 \leq$ 2wt%, optionally, Owt% < $w_1 \leq$ 1wt%.

In any embodiment of the present application, Owt% $\leq w_2 \leq$ 2wt%, optionally, Owt% < $w_2 \leq$ 1wt%.

In any embodiment of the present application, 0.01wt% $\leq w_3 \leq$ 5wt%, optionally, 0.01wt% $\leq w_3 \leq$ 2wt%.

In any embodiment of the present application, $w_1 = w_2$.

In any embodiment of the present application, the negative electrode active material is present in a weight percent content of from 95wt% to 99wt% based on the total weight of the negative electrode active material layer. As a result, it is possible to increase the energy density of the secondary battery.

In any embodiment of the present application, the negative electrode active material layer further comprises a negative electrode binder and/or a negative electrode dispersant.

In any embodiment of the present application, the negative electrode binder is present in a weight percent content of from 1 wt% to 2.5 wt% based on the total weight of the negative electrode active material layer.

In any embodiment of the present application, the negative electrode dispersant is present in a weight percent content of from 0.5wt% to 1.5wt% based on the total weight of the negative electrode active material layer.

In any embodiment of the present application, the negative electrode active material layer further comprises a negative electrode conductive agent, optionally the negative electrode conductive agent is present in a weight percent content of from Owt% to 1.5wt% based on the total weight of the negative electrode active material layer.

A second aspect of the present application provides a method of preparing a negative electrode plate, comprising steps of: providing a negative electrode slurry comprising a negative electrode active material and an additive; applying the negative electrode slurry to a negative electrode current collector, and obtaining the negative electrode plate after drying and cold pressing, wherein the negative electrode plate comprises a negative electrode current collector and a negative electrode active material layer provided on the negative electrode current collector, the negative electrode active material layer comprises a negative electrode active material and an additive, the additive comprises a shell wall and a cavity located on an inner side of the shell wall, and a thickness of the shell wall is denoted as d, a volume of the cavity is denoted

as $V_h$, a volume of the additive is denoted as $V_w$, and the additive satisfies $20nm \leq d \leq 300nm$ and $40\% \leq V_h/V_w \leq 90\%$.

In any embodiment of the present application, the negative electrode current collector comprises a first region and a second region located on the edge side and a third region located between the first region and the second region along a width direction of the negative electrode current collector, and the negative electrode current collector has a total coating width of W in which the first region has a coating width of 1/5 W, the second region has a coating width of 1/5 W, the third region has a coating width of 3/5 W, and in the method of preparing the negative electrode plate,, the negative electrode slurry is formulated to comprises a first slurry, a second slurry and a third slurry and the first slurry, the second slurry and the third slurry are applied to the first region, the second region and the third region of the negative electrode current collector, respectively and then dried to form a first portion, a second portion and a third portion of the negative electrode active material layer in which the additive in the first portion is present in a weight percent content of $w_1$, the additive in the second portion is present in a weight percent content of $w_2$, and the additive in the third portion is present in a weight percent content of $w_3$, and $0 \leq w_1/w_3 < 1$, and $0 \leq w_2/w_3 < 1$.

In any embodiment of the present application, the first slurry, the second slurry and the third slurry are applied by a single synchronized coating process or by a multiple stepwise coating process.

A third aspect of the present application provides a secondary battery comprising a negative electrode plate described in the first aspect of the present application, or a negative electrode plate obtained by the preparation method of the second aspect of the present application.

In any embodiment of the present application, the secondary battery satisfies $100 \leq K \leq 30000$, optionally $120 \leq K \leq 8000$, with

$$K = \frac{(1 + \lambda) \times \varepsilon^2 \times [(d^3 \times S \times \frac{H}{1000} - \left(\frac{V_h}{d^3}\right)]}{C_0 \times (1 - 80\%)}$$

in which $\lambda$ is a porosity of the negative electrode plate; $\varepsilon$ is a thickness rebound rate of the third portion of the negative electrode active material layer when a capacity of the secondary battery decays to 80% of an initial capacity of the secondary battery; $C_0$ is an initial capacity of the secondary battery in mAh; d is the thickness of the shell wall of the additive in nm; and $V_h$ is the volume of the cavity of the additive in $nm^3$; S is an area of the single-layer negative electrode plate in $mm^2$; H is an initial thickness of the third portion of the negative electrode active material layer in $\mu m$.

In any embodiment of the present application, $20\% \leq \lambda \leq 50\%$, optionally $23\% \leq \lambda \leq 35\%$.

In any embodiment of the present application, $20\% \leq \varepsilon \leq 40\%$, optionally, $25\% \leq \varepsilon \leq 35\%$.

In any embodiment of the present application, $20 \ nm \leq d \leq 300 \ nm$, optionally, $40 \ nm \leq d \leq 120 \ nm$.

In any embodiment of the present application, $1 \times 10^7 nm^3 \leq V_h \leq 1 \times 10^{12} nm^3$, optionally, $2.5 \times 10^8 nm^3 \leq V_h \leq 1 \times 10^{10} nm^3$.

In any embodiment of the present application, $1\times10^2 mm^2 \leq S \leq 1\times10^8 mm^2$, optionally, $1\times10^3 mm^2 \leq S \leq 1\times10^6 mm^2$.

In any embodiment of the present application, $10 \ \mu m \leq H \leq 250 \ \mu m$, optionally, $40 \ \mu m \leq H \leq 120 \ \mu m$.

In any embodiment of the present application, when a capacity of the secondary battery decays to 80% of an initial capacity of the secondary battery, a thickness rebound rate of the first portion of the negative electrode active material layer is denoted as $\varepsilon_1$, an initial thickness of the first portion of the negative electrode active material layer is denoted as $H_1$ in $\mu m$, a thickness rebound rate of the second portion of the negative electrode active material layer is denoted as $\varepsilon_2$, an initial thickness of the second portion of the negative electrode active material layer is denoted as $H_2$ in $\mu m$, and the secondary battery satisfies $0 < K_1/K \leq 1$, $0 < K_2/K \leq 1$, with

$$K_1 = \frac{(1 + \lambda) \times \varepsilon_1^2 \times [(d^3 \times S \times \frac{H_1}{1000} - \left(\frac{V_h}{d^3}\right)]}{C_0 \times (1 - 80\%)},$$

$$K_2 = \frac{(1 + \lambda) \times \varepsilon_2^2 \times [(d^3 \times S \times \frac{H_2}{1000} - \left(\frac{V_h}{d^3}\right)]}{C_0 \times (1 - 80\%)}.$$

In any embodiment of the present application, $0 < K_1/K \leq 0.95$.

In any embodiment of the present application, $0 < K_2/K \leq 0.95$.

In any embodiment of the present application, $100 \leq K_1 \leq 30000$, optionally $120 \leq K_1 \leq 8000$.

In any embodiment of the present application, $100 \leq K_2 \leq 30000$, optionally, $120 \leq K_2 \leq 8000$.

In any embodiment of the present application, $15\% \leq \varepsilon_1 \leq 35\%$, optionally, $25\% \leq \varepsilon_1 \leq 31\%$.

In any embodiment of the present application, $15\% \leq \varepsilon_2 \leq 35\%$, optionally, $25\% \leq \varepsilon_2 \leq 31\%$.

In any embodiment of the present application, $10~\mu m \leq H_1 \leq 250~\mu m$, optionally, $40~\mu m \leq H_1 \leq 120~\mu m$.

In any embodiment of the present application, $10~\mu m \leq H_2 \leq 250~\mu m$, optionally, $40~\mu m \leq H_2 \leq 120~\mu m$.

A fourth aspect of the present application provides an electrical device comprising the secondary battery of the third aspect of the present application.

The present application is capable of realizing an effective reduction of the expansion force of the secondary battery and an improvement of the safety performance of the secondary battery under the premise that the additive is present in a small amount and the energy density is not affected. The electrical device of the present application includes the secondary battery provided in the present application, and thus has at least the same advantages as the secondary battery.

## DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

Fig. 1 is a schematic diagram of an embodiment of a negative electrode plate of the present application.

Fig. 2 is a schematic diagram of an embodiment of a secondary battery of the present application.

Fig. 3 is an exploded schematic diagram of an embodiment of a secondary battery of the present application.

Fig. 4 is a schematic diagram of an embodiment of a battery module of the present application.

Fig. 5 is a schematic diagram of an embodiment of a battery pack of the present application.

Fig. 6 is an exploded schematic diagram of an embodiment of the battery pack shown in Fig. 5.

Fig. 7 is a schematic diagram of an embodiment of an electrical device including the secondary battery of the present application as a power source.

Fig. 8 is a schematic diagram for testing an expansion force of a secondary battery.

The drawings are not drawn to actual scale.

Reference numerals are as follows: 1. Battery pack; 2. Upper box body; 3. Lower box body; 4. Battery module; 5. Secondary battery; 51. Housing; 52. Electrode assembly; 53. Cover plate; 10. Negative electrode plate; 101. Negative electrode current collector; 1011. First region; 1012. Second region; 1013. Third region; 102. Negative electrode active material layer; 1021. First portion; 1022. Second portion; 1023. Third portion; 201. Sensor; 301. Steel plate; 302. Steel plate; and 303. Steel plate.

## DETAILED DESCRIPTION

Hereinafter, embodiments of the negative electrode plate, a method for preparing the same, the secondary battery and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all the technical features and the optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application, the terms "first", "second", "third", and so on. are used to distinguish between different objects and are not used to describe a particular order or order of precedence, unless otherwise indicated.

As used herein, the terms "a plurality of" mean two or more.

Unless otherwise indicated, terms used in the present application have the well-known meanings commonly understood by those skilled in the art.

Unless otherwise indicated, values of the parameters mentioned in the present application may be determined by various test methods commonly used in the field, for example, in accordance with the test methods given in the present application.

In the development of secondary battery technology, in addition to improving electrochemical performances of a secondary battery, safety performance is also an issue that cannot be ignored. During long-term cycling and storage of the secondary battery, the secondary battery is prone to swelling due to changes in the lattice structure of active materials and other reasons, and an expansion force of the secondary battery gradually increases as the number of cycles and storage period of the secondary battery increase. When the expansion force of the secondary battery is too high, the electrolytic solution infiltrated in the electrode plate will be squeezed out, easily resulting in electrolyte-bridge breaking. In this case, an active ion transmission channel inside the secondary battery is blocked, and the secondary battery's polarization increases greatly, so its rate performance decays rapidly, its capacity retention rate decreases greatly, and its service life is shortened significantly. In addition, when the expansion force of the secondary battery is too high, the structure of the secondary battery pack is also prone to failure, posing a safety risk.

Therefore, effective technical means are needed to reduce the expansion force of the secondary battery and improve the safety performance of the secondary battery.

During long-term cycling and storage of secondary batteries, a negative electrode changes more significantly than a positive electrode in its thickness. Current study suggests that the increase in thickness of the negative electrode is the main reason for the increase in expansion force of secondary batteries. There have been attempts in the existing technologies to prepare negative electrode plates by adding hollow carbon spheres to mix it with negative electrode active materials in the preparation of secondary batteries in which the hollow carbon spheres are applied to slow down the negative effect generated by changes in the thickness of the negative electrode, thereby improving cycle performances of the secondary batteries and reducing irreversible capacity loss. Nevertheless, the inventors of the present application have found in the course of their study that in the existing technologies, in order to effectively reduce the expansion force of the secondary battery, a relatively large amount of hollow carbon spheres are usually used, thereby significantly reducing energy density of the secondary battery.

In view of this, the inventor of the present application found in the course of in-depth study of the expansion problem of the secondary battery that by adding an additive having a cavity structure to a negative electrode plate, and adjusting a shell wall thickness and a volume ratio of a cavity of the additive, it is possible to effectively reduce the expansion force of the secondary battery, and to improve the safety performance of the secondary battery under the premise that the amount of the additive is relatively small, and that the energy density is not affected.

Specifically, the first aspect of embodiments of the present application provides a negative electrode plate.

The negative electrode plate comprises a negative electrode current collector and a negative electrode active material layer provided on the negative electrode current collector, wherein the negative electrode active material layer comprises a negative electrode active material and an additive, the additive comprises a shell wall and a cavity located on an inner side of the shell wall, and wherein a thickness of the shell wall is denoted as d, a volume of the cavity is denoted as $V_h$, a volume of the additive is denoted as $V_w$, and the additive satisfies $20nm \leq d \leq 300nm$ and $40\% \leq V_h/V_w \leq 90\%$.

The additive used in the negative electrode plate of the present application has a hollow structure, in which the cavity can provide a buffer space to buffer expansion of the negative electrode, thereby reducing an expansion force of the secondary battery. In the course of in-depth study of the expansion problem of the secondary battery, the inventors of the present application found that when the thickness d of the shell wall of the additive is too small and/or the volume ratio $V_h/V_w$ of the cavity of the additive is too large, the additive has a relatively fragile shell wall structure and is prone to crushing and pulverization, which in turn leads to a poorer buffering effect on the expansion of the negative electrode, and fails to effectively reduce the expansion force of the secondary battery and to improve the safety performance of the secondary battery. When the thickness d of the shell wall of the additive is too large and/or the volume ratio $V_h/V_w$ of the cavity of the additive is too small, the additive has a highly stable shell wall structure, but it is not prone to elastic deformation, which leads to a poor buffering effect on the expansion of the negative electrode, and thus fails to effectively reduce the expansion force of the secondary battery and to improve the safety performance of the secondary battery. When the additive satisfies $20nm \leq d \leq 300nm$ and $40\% \leq V_h/V_w \leq 90\%$ both, on the one hand, the additive having a larger cavity structure enables it to undergo a larger elastic deformation, which in turn can effectively slow down the negative effect caused by an expansion of the negative electrode, and on the other hand, the additive has a higher structural stability, so that no crushing or pulverization problem will occur when the additive undergoes a larger elastic deformation. Therefore, the present application is able to realize effective reduction of the expansion force of the secondary battery and improvement of the safety performance of the secondary battery under the premise that the additive is present in a small amount and the energy density is not affected.

In the present application, the thickness d of the shell wall of the additive, the volume $V_h$ of the cavity of the additive, and the volume $V_w$ of the additive are tested and obtained by the following method. A circular sample of 0.5 cm in diameter is cut from the negative electrode plate, and a TEM image is obtained through a transmission electron microscope (abbreviated as to be TEM) for the cross-section thereof, from which thicknesses of shell wall of the additive and volume particle sizes of the additive are counted in the region to obtain a cumulative distribution curve of the thicknesses of the shell wall of the additive and the volume particle sizes of the additive. The thickness corresponding to a percentage of 50% on the cumulative distribution curve is denoted as the thickness d of the shell wall of the additive, and the volume particle size corresponding to a percentage of 50% on the cumulative distribution curve is denoted as the volume particle size Dv50 of the additive, and according to the formula for an ideal sphere and taking the above obtained volume particle size Dv50 as a diameter, the volume $V_w$ of the additive is obtained through calculation based on the formula $V_w = (4/3) \times \pi \times (Dv50/2)^3$, and the volume $V_h$ of the cavity of the additive $V_h = (4/3) \times \pi \times (Dv50/2-d)^3$.

In the present application, the thickness d of the shell wall satisfies $20\,nm \leq d \leq 300\,nm$, for example, d may be 25 nm, 30 nm, 40 nm, 50 nm, 60 nm, 70 nm, 80 nm, 90 nm, 100 nm, 120 nm, 140 nm, 160 nm, 180 nm, 200 nm, 300 nm, or within a range consisting of any of the above values.

In some embodiments, optionally, $25nm \leq d \leq 200nm$, $25nm \leq d \leq 180nm$, $25nm \leq d \leq 150nm$, $30nm \leq d \leq 150nm$, $40nm \leq d \leq 120nm$, $40nm \leq d \leq 100nm$. As a favorable result, the structural stability of the additive is enhanced and the strain of the additive keeps stable, thus better slowing down the negative effect produced by expansion of the negative electrode, so that it is possible to effectively reduce the expansion force of the secondary battery and improve the safety performance of the secondary battery under the premise that the additive is present in a small amount and the energy density is not affected.

In the present application, the volume ratio $V_h/V_w$ of the cavity of the additive satisfies $40\% \leq V_h/V_w \leq 90\%$, for example $V_h/V_w$ can be 48%, 50%, 55%, 60%, 65%, 70%, 75%, 80%, 85%, 90% or within a range consisting of any of the above values.

In some embodiments, Optionally, $50\% \leq V_h/V_w \leq 90\%$, $55\% \leq V_h/V_w \leq 90\%$, $60\% \leq V_h/V_w \leq 90\%$, $65\% \leq V_h/V_w \leq 90\%$, $70\% \leq V_h/V_w \leq 90\%$, and $70\% \leq V_h/V_w \leq 89\%$. As a favorable result, the additive has a large elastic deformation and provides a buffer space for expansion of particles of the negative electrode active material, thus better slowing down the negative effect produced by expansion of the negative electrode, so that it is possible to effectively reduce the expansion force of the secondary battery and improve the safety performance of the secondary battery under the premise that the additive is present in a small amount and the energy density is not affected.

In some embodiments, $25\,nm \leq d \leq 200\,nm$ and $60\% \leq V_h/V_w \leq 90\%$. Optionally, $40\,nm \leq d \leq 120\,nm$ and $70\% \leq$

$V_h/V_w \leq 89\%$. As a favorable result, the additive can better combine a large elastic deformation and a high structural stability, thus better slowing down the negative effect produced by expansion of the negative electrode, so that it is possible to effectively reduce the expansion force of the secondary battery and improve the safety performance of the secondary battery under the premise that the additive is present in a small amount and the energy density is not affected.

In some embodiments of the present application, the additive comprises one or more selected from hollow spheres and hollow polyhedrons. In the present application, the term "hollow sphere" refers to it has a sphere or near-sphere structure, and not the case that all spheres are controlled to be ideal spheres; "hollow polyhedra" can include both regular polyhedra, such as cube, and irregular polyhedra.

In some embodiments, the additive comprises hollow spheres. As a result, it is possible to slow down the negative effect produced by expansion of the negative electrode well, so that it is possible to effectively reduce the expansion force of the secondary battery and improve the safety performance of the secondary battery under the premise that the additive is present in a small amount and the energy density is not affected.

In some embodiments, as an example, the additive comprises hollow carbon spheres, optionally including one or more selected from amorphous hollow carbon spheres, graphitized hollow carbon spheres, and hollow graphene spheres. As a result, it is possible to slow down the negative effect produced by expansion of the negative electrode well, so that it is possible to effectively reduce the expansion force of the secondary battery and improve the safety performance of the secondary battery under the premise that the additive is present in a small amount and the energy density is not affected.

The inventors of the present application through further research found that a particle size of the additive affects an improvement effect on safety performance of the secondary battery. When the additive has a small particle size, its effect on mitigating the negative result generated by expansion of the negative electrode is relatively weak, which results in a poorer reduction in the expansion force of the secondary battery; meanwhile when the additive has a small particle size, it is prone to filling into the gap between particles of the negative electrode active material, which tends to result in the negative electrode plate having a high compaction density and a low porosity. When the compaction density of the negative electrode plate is high, the negative electrode plate has a more obvious thickness rebound during the application of the secondary battery, which is likely to lead to a significant increase in the expansion force of the secondary battery, and which is unfavorable for the improvement of the safety performance of the secondary battery; when the compaction density of the negative electrode plate is high, the negative electrode plate has a poor liquid infiltration and retention to the electrolyte, and thus when the expansion force of the secondary battery increases, the electrolytic solution in the negative electrode plate is more likely to be squeezed out, which in turn is more likely to cause problems such as electrolyte-bridge breaking, lithium precipitation in the negative electrode, and sharp drop in the cycle capacity of the secondary battery; and when the compaction density of the negative electrode plate is high, ionic conduction characteristics of the negative electrode plate deteriorate, which is unfavorable to the cycle performance and rate performance of the secondary battery. At the same time, the inventors found in a further study that the particle size of the additive should not be too large, since in the event that a certain amount of additive is used, the larger the particle size of the additive is, the more likely its distribution in the negative electrode active material layer tends to be non-uniform, which in turn leads to a weaker effect on mitigating the negative result generated by expansion of the negative electrode, a poorer reduction of the expansion force of the secondary battery, and a poorer improvement of the safety performance of the secondary battery. In some embodiments, the volume particle size Dv50 of the additive may be from 0.85 μm to 5 μm, optionally from 0.85 μm to 4 μm, from 0.9 μm to 3 μm, from 1 μm to 2.5 μm, or from 1 μm to 2 μm. As a result, on the one hand, it can effectively reduce the expansion force of the secondary battery and improve the safety performance of the secondary battery, and, on the other hand, the secondary battery can be ensured to have a good cycle performance and rate performance.

In some embodiments, the additive has a volume particle size satisfying $0.5 \leq (Dv90-Dv10)/Dv50 \leq 8$, optionally, $1 \leq (Dv90-Dv10)/Dv50 \leq 5$, $2 \leq (Dv90-Dv10)/Dv50 \leq 5$.

In the present application, volume particle sizes Dv10, Dv50, Dv90 of a material have the meanings known in the art, which indicate the corresponding particle size when a cumulative volume distribution percentage of the material reaches 10%, 50%, 90%, respectively, and can be determined by instruments and methods known in the art. For example, it can be determined by a laser particle size analyzer with reference to GB/T 19077-2016. The testing instrument may be a Mastersizer 3000 laser particle size analyzer of Malvern Instruments Ltd. of the United Kingdom.

In some embodiments, based on the total weight of the negative electrode active material layer, the additive is present in a weight percent content of from 0.01 wt% to 3 wt%, optionally from 0.1 wt% to 2.5 wt%, from 0.1 wt% to 2 wt%, from 0.1 wt% to 1.5 wt%, from 0.1 wt% to 1 wt%. In the present application, it is possible to effectively reduce the expansion force of the secondary battery and improve the safety performance of the secondary battery under the premise that the additive is present in a small amount and the energy density is not affected.

Currently, hollow microspheres in the existing negative electrode plate are uniformly and equally distributed. As a result, although the expansion force of the secondary battery is reduced, the ratio of the negative electrode active material is also reduced, thereby reducing the energy density of the secondary battery. Through an in-depth study of the expansion problem of the secondary battery, the inventors of the present application further found that the expansion force of the secondary battery is not uniformly distributed, and through an in-depth study of characteristics of the expansion force distribution of the secondary battery, the inventors realized the effective reduction of the expansion force of the secondary battery and the improvement of the safety performance of the secondary battery under the condition that the amount of the additive is further reduced.

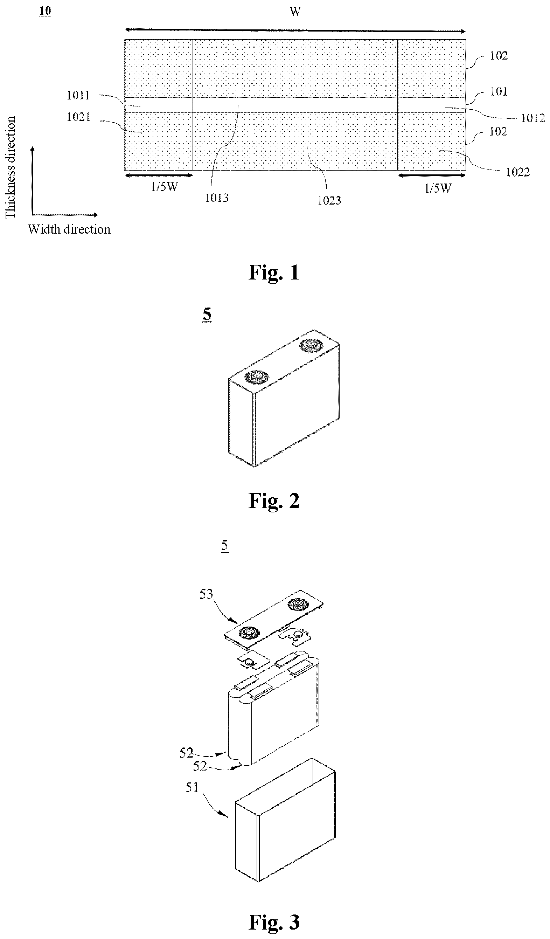

FIG. 1 is a schematic diagram of an embodiment of the negative electrode plate 10 of the present application. As shown in FIG. 1, the negative electrode plate 10 includes a negative electrode current collector 101 and a negative electrode active material layer 102 disposed on the negative electrode current collector 101, the negative electrode active material layer 102 comprises a first portion 1021 and a second portion 1022 located on the edge side and a third portion 1023 located between the first portion 1021 and the second portion 1022 along a width direction of the negative electrode active material layer 102, and a total width of the negative electrode active material layer 102 is W in which the first portion 1021 has a width of 1/5 W, the second portion 1022 has a width of 1/5 W, the third portion 1023 has a width of 3/5 W, the additive in the first portion 1021 is present in a weight percent content of $w_1$, the additive in the second portion 1022 is present in a weight percent content of $w_2$, and the additive in the third portion 1023 is present in a weight percent content of $w_3$, and $0 \leq w_1/w_3 < 1$, and $0 \leq w_2/w_3 < 1$.

Through an in-depth study on the distribution of expansion forces in secondary batteries the inventors have found that a plane with the largest area in an electrode assembly will be squeezed the most during long-term cycling and storage of secondary batteries. Thus, by further adjusting the distribution of the additive in the width direction of the negative electrode active material layer, and setting a high content of the additive in the third portion, and a low content of the additive in the first portion and the second portion, it is possible to effectively reduce the expansion force of the secondary battery and improve the safety performance of the secondary battery, and it is possible to further reduce the amount of the additive and increase the energy density of the secondary battery under the premise that same improvement of the expansion force can be achieved.

In some embodiments, $0 < w_1/w_3 \leq 0.8$, $0 < w_1/w_3 \leq 0.7$, $0 < w_1/w_3 \leq 0.6$, $0 < w_1/w_3 \leq 0.5$, $0 < w_1/w_3 \leq 0.4$.

In some embodiments, $0 < w_2/w_3 \leq 0.8$, $0 < w_2/w_3 \leq 0.7$, $0 < w_2/w_3 \leq 0.6$, $0 < w_2/w_3 \leq 0.5$, $0 < w_2/w_3 \leq 0.4$.

By further adjusting the ratio between the amount of the additive in the first portion and/or the second portion and the amount of the additive in the third portion to be within the above range, it is possible to effectively reduce the expansion force of the secondary battery and improve the safety performance of the secondary battery under the premise that the amount of the additive is further reduced.

In some embodiments, $0wt\% \leq w_1 \leq 2wt\%$, optionally, $0wt\% < w_1 \leq 1.8wt\%$, $0wt\% < w_1 \leq 1.6wt\%$, $0wt\% < w_1 \leq 1.4wt\%$, $0wt\% < w_1 \leq 1.2wt\%$, $0wt\% < w_1 \leq 1wt\%$, $0wt\% < w_1 \leq 0.8wt\%$, $0wt\% < w_1 \leq 0.6wt\%$, $0wt\% < w_1 \leq 0.4wt\%$.

In some embodiments, $0wt\% \leq w_2 \leq 2wt\%$ and, optionally, $0wt\% < w_2 \leq 1.8wt\%$, $0wt\% < w_2 \leq 1.6wt\%$, $0wt\% < w_2 \leq 1.4wt\%$, $0wt\% < w_2 \leq 1.2wt\%$, $0wt\% < w_2 \leq 1wt\%$, $0wt\% < w_2 \leq 0.8wt\%$, $0wt\% < w_2 \leq 0.6wt\%$, $0wt\% < w_2 \leq 0.4wt\%$.

In some embodiments, $0.01wt\% \leq w_3 \leq 5wt\%$, optionally, $0.01wt\% \leq w_3 \leq 4.5wt\%$, $0.01wt\% \leq w_3 \leq 4wt\%$, $0.01wt\% \leq w_3 \leq 3.5wt\%$, $0.01wt\% \leq w_3 \leq 3wt\%$, $0.01wt\% \leq w_3 \leq 2.5wt\%$, $0.01wt\% \leq w_3 \leq 2wt\%$. $0.01wt\% \leq w_3 \leq 1.5wt\%$, and $0.01wt\% \leq w_3 \leq 1wt\%$.

In some embodiments, $w_1 = w_2$.

In the present application, the negative electrode collector has two surfaces opposite in its thickness direction, and the negative electrode active material layer can be disposed on either or both of the two opposite surfaces of the negative electrode collector.

In some embodiments, the negative electrode active material may be a negative electrode active material commonly known in the art for secondary batteries. As an example, the negative electrode active material may include but not limited to, one or more of natural graphite, artificial graphite, soft carbon, hard carbon, a silicon-based material, a tin-based material, and lithium titanate. The silicon-based material may comprise one or more of elemental silicon, a silicon oxide compound, a silicon carbon composite, a silicon nitrogen composite, and a silicon alloy. The tin-based material may comprise one or more of elemental tin, a tin oxide compound, and a tin alloy. However, the present application is not limited to these materials, and other conventional materials that may be used as negative electrode active materials of secondary batteries may alternatively be used.

In some embodiments, the negative electrode active material has a volume particle size Dv50 of from 8 μm-22 μm, optionally from 12 μm-18 μm.

In some embodiments, a weight percentage of said negative electrode active material may be 95wt%-99wt% based on the total weight of said negative electrode active material layer. This thereby facilitates increasing the energy density of the secondary battery.

In some embodiments, the negative electrode active material layer may further include a negative electrode binder and/or a negative electrode dispersant. The negative electrode binder is used to improve the adhesion between particles of the negative electrode active material and between the negative electrode active material and the negative electrode current collector so as to enable the negative electrode plate to form a good electronic network. There is no particular limitation on the type of the negative electrode binder in the present application and materials known in the art may be used. As an example, the negative electrode binder may include one or more of styrene butadiene rubber (SBR), water-soluble unsaturated resin SR-1B, water-based acrylic resin such as polyacrylic acid PAA, polymethacrylic acid PMAA, and polyacrylic acid sodium PAAS, polyacrylamide (PAM), polyvinyl alcohol (PVA), sodium alginate (SA), and carboxymethyl chitosan (CMCS). In some embodiments, the weight percentage of said negative electrode binder may be greater than 0 and less than or equal to 2.5 wt%, optionally from 1 wt% to 2.5 wt%, based on the total weight of said negative electrode active material layer. The negative electrode dispersant is used to improve the stability and dispersion of the negative electrode slurry. There is no particular limitation on the type of the negative electrode dispersant in the present application and materials known in the art may be used. As an example, said negative electrode dispersant may include sodium carboxymethyl cellulose (CMC). In some embodiments, the weight percentage of said negative electrode dispersant may be greater than 0 and less than or equal to 1.5 wt%, optionally from 0.5 wt% to 1.5 wt%, based on the total weight of said negative electrode active material layer.

In some embodiments, the negative electrode active material layer further includes a negative electrode conductive agent. There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, the weight percentage of said negative electrode conducting agent may be from 0 wt% to 1.5 wt%, based on the total weight of said negative electrode active material layer. The weight percentage of said negative electrode conducting agent of 0 wt% means that no negative electrode conductive agent is added.

In some embodiments, the negative electrode active material layer may further optionally include other auxiliaries, such as a PTC thermistor material.

In some embodiments, the negative electrode current collector may be a metal foil or a composite current collector. As an example of the metal foil, a copper foil may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver and silver alloy. As an example, the polymer material base layer may include one or more of polypropylene (PP), polyethylene terephthalate (PET), polybutylene terephthalate (PBT), polystyrene (PS) and polyethylene (PE).

The negative electrode plate does not exclude other additional functional layers than the negative electrode active material layer. For example, in some embodiments, the negative electrode plate of the present application further includes an electrically conductive primer (e.g., comprising an electrically conductive agent and a binder) sandwiched between the negative electrode current collector and the negative electrode active material layer and disposed on the surface of the negative electrode current collector; in some embodiments, the negative electrode plate of the present application further includes a protective layer covering the surface of the negative electrode active material layer.

[Preparation method]

A second aspect of embodiments of the present application provides a method of preparing a negative electrode plate.

The method of preparing a negative electrode plate comprises steps of: providing a negative electrode slurry comprising a negative electrode active material and an additive; applying the negative electrode slurry to a negative electrode current collector, and obtaining the negative electrode plate after drying and cold pressing, wherein the negative electrode plate comprises a negative electrode current collector and a negative electrode active material layer provided on the negative electrode current collector, the negative electrode active material layer comprises a negative electrode active material and an additive, the additive comprises a shell wall and a cavity located on an inner side of the shell wall, and a thickness of the shell wall is denoted as d, a volume of the cavity is denoted as $V_h$, a volume of the additive is denoted as $V_w$, and the additive satisfies $20nm \leq d \leq 300nm$ and $40\% \leq V_h/V_w \leq 90\%$.

In some embodiments, as shown in FIG. 1, the negative electrode current collector 101 comprises a first region 1011 and a second region 1012 located on the edge side and a third region 1013 located between the first region 1011 and the second region 1012 along a width direction of the negative electrode current collector 101, and the negative electrode current collector has a total coating width of W in which the first region 1021 has a coating width of 1/5 W, the second region 1022 has a coating width of 1/5 W, the third region 1023 has a coating width of 3/5 W, and in the method of preparing the negative electrode plate, the negative electrode slurry is formulated to comprise a first slurry, a second slurry and a third slurry and the first slurry, the second slurry and the third slurry are applied to the first region 1011, the second region 1012 and the third region 1013 of the negative electrode current collector, respectively and then dried to form a first portion 1021, a second portion 1022 and a third portion 1023 of the negative electrode active material layer in which the additive in the first portion 1021 is present in a weight percent content of $w_1$, the additive in the second portion 1022 is present in a weight percent content of $w_2$, and the additive in the third portion 1023 is present in a weight percent content of $w_3$, and $0 \leq w_1/w_3 < 1$, and $0 \leq w_2/w_3 < 1$. In the present application, the total coating width of the negative electrode current collector is the same as the total width of the negative electrode active material layer.

In some embodiments, the negative electrode slurry comprises a negative electrode binder and/or a negative electrode dispersant.

In some embodiments, the negative electrode slurry may comprise a negative electrode conductive agent. Of course, the negative electrode slurry may also not include a negative electrode conductive agent.

In some embodiments, solvents for formulating the negative electrode slurry may be N-methylpyrrolidone (NMP) or deionized water, without limited thereto.

There is no particular limitations in the present application on parameters such as concentration, coating weight, coating thickness, and the like of the negative electrode slurry, which may be selected according to demand.

In the process of formulating the negative electrode slurry, there is no particular restriction on how the additives are added and when the additives are added. For example, the additives may be added in the form of a solid powder or in the form of a suspension; the additives may be added during a mixing process of the negative electrode slurry or at the stage of dry mixing.

In the coating process of the negative electrode slurry, the first slurry, the second slurry and the third slurry may be applied by a single synchronized coating process or by a multiple stepwise coating process.

The preparation method provided in the second aspect of embodiments of the present application is capable of preparing the negative electrode plate of any of the first aspect of embodiments of the present application. In the preparation process of the negative electrode plate, the specific types and dosages of some of the raw materials used and other parameters can be referred to the negative electrode plate of the first aspect of embodiments of the present application and will not be repeated herein.

In addition, it should be understood that although a first region 1011, a second region 1012 and a third region 1013 of the negative electrode current collector 101 are distinct with each other by lines as shown in FIG. 1 and a first portion 1021, a second portion 1022 and a third portion 1023 of the negative electrode active material layer 102 are distinct with each other by lines as shown in FIG. 1, there may not actually be an interface in real negative electrode current collector and negative electrode active material layer, and the negative electrode current collector 101 as a whole may be continuous and the negative electrode active material layer 102 as a whole may also be continuous.

In some embodiments, along a width direction of the negative electrode current collector 101, the negative electrode current collector 101 may further include an uncoated region (not shown) where the negative electrode active material layer 102 is not provided. That is, the total width of the negative electrode current collector 101 is greater than the total coating width of the negative electrode current collector 101 (or the total width of the negative electrode active material layer).

[Secondary battery]

A third aspect of embodiments of the present application provides a secondary battery. The secondary battery comprises a positive electrode plate, a negative electrode plate and an electrolyte. There is no particular restriction on the type of the secondary battery. For example, the secondary battery may be a lithium-ion battery, a sodium-ion battery and so on.

The negative electrode plate adopted by the secondary battery of the present application comprises the negative electrode plate described in any of the first aspect of embodiments of the present application, or the negative electrode plate obtained by the preparation method of any of the second aspect of embodiments of the present application.

In some embodiments, the secondary battery satisfies $100 \le K \le 30000$, with

$$K = \frac{(1 + \lambda) \times \varepsilon^2 \times [(d^3 \times S \times \frac{H}{1000} - (\frac{V_h}{d^3})]}{C_0 \times (1 - 80\%)}$$

in which $\lambda$ is a porosity of the negative electrode plate; $\varepsilon$ is a thickness rebound rate of the third portion of the negative electrode active material layer when a capacity of the secondary battery decays to 80% of an initial capacity of the secondary battery; $C_0$ is an initial capacity of the secondary battery in mAh; d is the thickness of the shell wall of the additive in nm; and $V_h$ is the volume of the cavity of the additive in $nm^3$; S is an area of the single-layer negative electrode plate in $mm^2$; H is an initial thickness of the third portion of the negative electrode active material layer in $\mu m$.

The inventors through an in-depth study have found that when the above parameter K of the secondary battery is in the range of 100 and 30,000, the secondary battery may have a smaller expansion force and a higher safety performance, while the secondary battery may further have a higher energy density.

In some embodiments, optionally, $100 \le K \le 20,000$, $120 \le K \le 16,000$, $120 \le K \le 12,000$, $120 \le K \le 10,000$, $120 \le K \le 9,000$, $120 \le K \le 8,000$, $200 \le K \le 8,000$, $300 \le K \le 8,000$, $400 \le K \le 8,000$, $500 \le K \le 8,000$.

In the present application, the porosity of the negative electrode plate has a meaning known in the art and can be determined by methods known in the art. The exemplary test method is as follows: taking a negative electrode plate with a coating on one side and cold-pressed (in the case of a negative electrode plate with a coating on both sides, the negative electrode active material layer on one of sides may be wiped off first), punching and cutting it into a small circular sample of a certain area, calculating an apparent volume $V_1$ of the negative electrode plate; with reference to GB/T24586-2009, measuring a true volume $V_2$ of the negative electrode plate by a true density tester with inert gases (e.g., helium or nitrogen) as a medium, via a gas displacement. The porosity of the negative electrode plate is calculated by the formula of $(V_1-V_2)/V_1 \times 100\%$. Multiple samples (e.g., 30 slices) of the negative electrode plate having good appearance, and no powder off on the edge can be taken for testing, and the results are averaged, thereby improving accuracy of the test results. The testing instrument can be a Micromeritics AccuPyc II 1340 true density tester.

$\varepsilon$ is a thickness rebound rate of the third portion of the negative electrode active material layer when a capacity of the secondary battery decays to 80% of an initial capacity of the secondary battery, and $\varepsilon = (H'-H)/H$. H' is a thickness of the third portion of the negative electrode active material layer as measured when a capacity of the secondary battery decays to 80% of the initial capacity of the secondary battery. H is an initial thickness of the third portion of the negative electrode active material layer, which in the present application is a thickness of the third portion of the negative electrode active material layer as measured when the number of cycles of the secondary battery is less than or equal to 50.

In the present application, the initial capacity $C_0$ of the secondary battery is a capacity of the secondary battery when the number of cycles of the secondary battery is less than or equal to 50 cycles.

In the present application, S is an area of the single-layer negative electrode plate. When the electrode assembly has a stacked structure, S = a width of the negative electrode plate $\times$ a length of the negative electrode plate; when the electrode assembly has a coiled structure, S = half of the perimeter of the coil $\times$ a width of the negative electrode plate.

In some embodiments, $20\% \leq \lambda \leq 50\%$, e.g., $\lambda$ may be 21%, 23%, 25%, 27%, 29%, 31%, 33%, 35%, 37%, 39%, 41%, 43%, 45%, 50%, or within a range consisting of any of the above values. Optionally, $23\% \leq \lambda \leq 35\%$.

In some embodiments, $20\% \leq \varepsilon \leq 40\%$, e.g., $\varepsilon$ may be 21%, 23%, 25%, 27%, 29%, 31%, 33%, 35%, 37%, 40% or within a range consisting of any of the above values. Optionally, $25\% \leq \varepsilon \leq 35\%$.

In some embodiments, $20\ nm \leq d \leq 300\ nm$, e.g., d may be 25 nm, 30 nm, 40 nm, 50 nm, 60 nm, 70 nm, 80 nm, 90 nm, 100 nm, 120 nm, 140 nm, 160 nm, 180 nm, 200 nm, 300 nm, or within a range comprising any of the above values. Optionally, $25 nm \leq d \leq 200 nm$, $25 nm \leq d \leq 180 nm$, $25 nm \leq d \leq 150 nm$, $30 nm \leq d \leq 150 nm$, $40 nm \leq d \leq 120 nm$, $40 nm \leq d \leq 100 nm$.

In some embodiments, $1 \times 10^7 nm^3 \leq V_h \leq 1 \times 10^{12}\ nm^3$, optionally, $5 \times 10^7\ nm^3 \leq V_h \leq 2 \times 10^{10}\ nm^3$, $1 \times 10^8\ nm^3 \leq V_h \leq 1 \times 10^{10}\ nm^3$, $2.5 \times 10^8\ nm^3 \leq V_h \leq 1 \times 10^{10}\ nm^3$.

In some embodiments, $1 \times 10^2 mm^2 \leq S \leq 1 \times 10^8 mm^2$, optionally, $1 \times 10^3 mm^2 \leq S \leq 1 \times 10^6 mm^2$, $1 \times 10^4 mm^2 \leq S \leq 1 \times 10^6 mm^2$.

In some embodiments, $10\ \mu m \leq H \leq 250\ \mu m$, optionally, $40\ \mu m \leq H \leq 120\ \mu m$, $40\ \mu m \leq H \leq 100\ \mu m$, $40\ \mu m \leq H \leq 80\ \mu m$.

In some embodiments, when a capacity of the secondary battery decays to 80% of an initial capacity of the secondary battery, a thickness rebound rate of the first portion of the negative electrode active material layer is denoted as $\varepsilon_1$, an initial thickness of the first portion of the negative electrode active material layer is denoted as $H_1$ in $\mu m$, a thickness rebound rate of the second portion of the negative electrode active material layer is denoted as $\varepsilon_2$, an initial thickness of the second portion of the negative electrode active material layer is denoted as $H_2$ in $\mu m$, and the secondary battery satisfies $0 < K_1/K \leq 1$, $0 < K_2/K \leq 1$, with

$$K_1 = \frac{(1 + \lambda) \times \varepsilon_1^2 \times [(d^3 \times S \times \frac{H_1}{1000} - (\frac{V_h}{d^3})]}{C_0 \times (1 - 80\%)},$$

$$K_2 = \frac{(1 + \lambda) \times \varepsilon_2^2 \times [(d^3 \times S \times \frac{H_2}{1000} - (\frac{V_h}{d^3})]}{C_0 \times (1 - 80\%)}$$

The inventors through an in-depth study found that when the above parameters $K_1$, $K_2$, and K of the secondary battery satisfy $0 < K_1/K \leq 1$, $0 < K_2/K \leq 1$, the secondary battery may have a smaller expansion force and a higher safety performance, while the secondary battery may have a higher energy density.

In some embodiments, $0 < K_1/K \leq 0.95$, $0 < K_1/K \leq 0.94$, $0 < K_1/K \leq 0.92$, $0 < K_1/K \leq 0.90$, $0 < K_1/K \leq 0.88$, and $0 < K_1/K \leq 0.86$. As a favorable result, the energy density of the secondary battery is further improved.

In some embodiments, $0 < K_2/K \leq 0.95$, $0 < K_2/K \leq 0.94$, $0 < K_2/K \leq 0.92$, $0 < K_2/K \leq 0.90$, $0 < K_2/K \leq 0.88$, $0 < K_2/K \leq 0.86$. As a favorable result, the energy density of the secondary battery is further improved.

In some embodiments, $100 \leq K_1 \leq 30,000$, optionally, $100 \leq K_1 \leq 20,000$, $120 \leq K_1 \leq 16,000$, $120 \leq K_1 \leq 12,000$, $120 \leq K_1 \leq 10,000$, $120 \leq K_1 \leq 9,000$, $120 \leq K_1 \leq 8,000$, $200 \leq K_1 \leq 8,000$, $300 \leq K_1 \leq 8,000$, $400 \leq K_1 \leq 8000$, $500 \leq K_1 \leq 8000$. The

inventors through an in-depth study have found that when the above parameter $K_1$ of the secondary battery is within the above ranges, the secondary battery can have a further improved energy density while having a smaller expansion force and a higher safety performance.

In some embodiments, $100 \leq K_2 \leq 30,000$, optionally $100 \leq K_2 \leq 20,000$, $120 \leq K_2 \leq 16,000$, $120 \leq K_2 \leq 12,000$, $120 \leq K_2 \leq 10,000$, $120 \leq K_2 \leq 9,000$, $120 \leq K_2 \leq 8,000$, $200 \leq K_2 \leq 8,000$, $300 \leq K_2 \leq 8,000$, $400 \leq K_2 \leq 8000$, $500 \leq K_2 \leq 8000$. The inventors through an in-depth study have found that when the above parameter $K_2$ of the secondary battery is within the above ranges, the secondary battery can have a further improved energy density while having a smaller expansion force and a higher safety performance.

In some embodiments, $15\% \leq \varepsilon_1 \leq 35\%$, optionally $25\% \leq \varepsilon_1 \leq 31\%$.

In some embodiments, $15\% \leq \varepsilon_2 \leq 35\%$, optionally $25\% \leq \varepsilon_2 \leq 31\%$.

In some embodiments, $10\,\mu m \leq H_1 \leq 250\,\mu m$, optionally, $40\,\mu m \leq H_1 \leq 120\,\mu m$, $40\,\mu m \leq H_1 \leq 100\,\mu m$, $40\,\mu m \leq H_1 \leq 80\,\mu m$.

In some embodiments, $10\,\mu m \leq H_2 \leq 250\,\mu m$, optionally, $40\,\mu m \leq H_2 \leq 120\,\mu m$, $40\,\mu m \leq H_2 \leq 100\,\mu m$, $40\,\mu m \leq H_2 \leq 80\,\mu m$.

$\varepsilon_1$ is a thickness rebound rate of the first portion of the negative electrode active material layer when a capacity of the secondary battery decays to 80% of an initial capacity of the secondary battery in which $\varepsilon_1 = (H_1'-H_1)/H_1$. $H_1'$ is a thickness of the first portion of the negative electrode active material layer as measured when a capacity of the secondary battery decays to 80% of an initial capacity of the secondary battery. $H_1$ is an initial thickness of the first portion of the negative electrode active material layer, which in the present application is a thickness of the first portion of the negative electrode active material layer as measured when the number of cycles of the secondary battery is less than or equal to 50 cycles.

$\varepsilon_2$ is a thickness rebound rate of the second portion of the negative electrode active material layer when a capacity of the secondary battery decays to 80% of an initial capacity of the secondary battery in which $\varepsilon_2 = (H_2'-H_2)/H_2$. $H_2'$ is a thickness of the second portion of the negative electrode active material layer as measured when a capacity of the secondary battery decays to 80% of an initial capacity of the secondary battery. $H_2$ is an initial thickness of the second portion of the negative electrode active material layer, which in the present application is a thickness of the second portion of the negative electrode active material layer as measured when the number of cycles of the secondary battery is less than or equal to 50 cycles.

In some embodiments, H, $H_1$ and $H_2$ may be the same. That is, the thicknesses of the first portion, the second portion, and the third portion of the negative electrode active material layer are the same, when the number of cycles of the secondary battery is less than or equal to 50 cycles.

In the present application, the thickness parameters of the negative electrode active material layer (e.g., H, H', $H_1$, $H_1'$, $H_2$, $H_2'$) all refer to the thickness of the negative electrode active material layer disposed on one side of the negative electrode current collector.

It should be noted that parameters (e.g., thickness, porosity, and structure and content of additives and so on) of a negative electrode active material layer given in the present application each refer to the parameters of the negative electrode active material layer on one side of the negative electrode current collector. When the negative electrode active material layer is disposed on both sides of the negative electrode current collector, if the parameters of the negative electrode active material layer on either side satisfy the present application, it will be considered to fall within the scope of protection of the present application.

[Positive electrode plate]

In some embodiments, the positive electrode plate includes a positive electrode current collector and a positive electrode active material layer disposed on at least one surface of the positive electrode current collector and including a positive electrode active material. For example, the positive electrode current collector has two opposite surfaces in its thickness direction, and the positive electrode active material layer is disposed on either or both of the two opposite surfaces of the positive electrode current collector.

The positive electrode film layer includes a positive electrode active material, which may be a positive electrode active material commonly known in the art for secondary batteries.

When the secondary battery of the present application is a lithium-ion battery, the positive electrode active material may include one or more of a lithium transition metal oxide, a lithium-containing phosphate with an olivine structure, and respective modified compounds thereof. Examples of the lithium transition metal oxide may include one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate with an olivine structure may include one or more of a lithium iron phosphate, a composite material of a lithium iron phosphate and carbon, a lithium manganese phosphate, a composite material of a lithium manganese phosphate and carbon, a lithium manganese iron phosphate, a composite material of a lithium manganese iron phosphate and carbon, and respective modified compounds thereof. The present application is not limited to these materials, and may also use other conventionally known materials that can be used as positive electrode active materials of secondary batteries.

In some embodiments, in order to further improve energy density of the secondary battery, the positive electrode active material for the lithium-ion secondary battery includes one or more of a lithium transition metal oxide having a general formula of $LiNi_aCo_bM_dO_eA_f$, and respective modified compounds thereof. $0.8 \leq a \leq 1.2$, $0.5 \leq b < 1$, $0 < c < 1$, $0 < d < 1$, $1 \leq e \leq 2$, $0 \leq f \leq 1$, M comprises one or more selected from Mn, Al, Zr, Zn, Cu, Cr, Mg, Fe, V, Ti, and B, and A comprises one or more selected from N, F, S, and Cl.

As an example, the positive electrode active material for the lithium-ion secondary battery may include one or more of $LiCoO_2$, $LiNiO_2$, $LiMnO_2$, $LiMn_2O_4$, $LiNi_{1/3}CO_{1/3}Mn_{1/3}O_2$(NCM333), $LiNi_{0.3}Co_{0.2}Mn_{0.3}O_2$(NCM523), $LiNi_{0.6}Co_{0.2}Mn_{0.2}O_2$(NCM622), $LiNi_{0.8}Co_{0.1}Mn_{0.1}O_2$(NCM811), $LiNi_{0.85}Co_{0.13}Al_{0.05}O_2$, $LiFePO_4$ and $LiMnPO_4$.

When the secondary battery of the present application is a sodium ion battery, the positive electrode active material may include, but is not limited to, one or more of a sodium-containing transition metal oxide, a polyanionic material (e.g., a phosphate, a fluorophosphate, a pyrophosphate, a sulfate, and so on), and a Prussian blue-like material.

As an example, the positive electrode active material for the sodium ion battery may include one or more of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, a Prussian blue-like material, and a material having a general formula of $X_pM'_q(PO_4)_rO_xY_{3-x}$. In the general formula $X_pM'_q(PO_4)_rO_xY_{3-x}$, $0 < p \leq 4$, $0 < q \leq 2$, $1 \leq r \leq 3$, and $0 \leq x \leq 2$, X comprises one or more of one or more selected from $H^+$, $Li^+$, $Na^+$, $K^+$, and $NH_4^+$, and M' is a transition metal cation, optionally comprising one or more selected from V, Ti, Mn, Fe, Co, Ni, Cu and Zn, and Y is a halogen anion, optionally including one or more selected from F, Cl and Br.

In the present application, the modified compounds of each of the above positive electrode active materials may be obtained by modifying the positive electrode active material by doping and/or surface coating.

In some embodiments, the positive electrode active material layer may optionally further include a positive electrode conductive agent. There is no particular limitation on the type of the positive electrode conductive agent in the present application. As an example, the positive electrode conductive agent includes one or more of superconducting carbon, conductive graphite, acetylene black, carbon black, Ketjen black, carbon dots, carbon nanotubes, graphene, and carbon nanofibers.

In some embodiments, the positive electrode active material layer may further optionally include a positive electrode binder. There is no particular limitation on the type of the positive electrode binder in the present application. As an example, the positive electrode binder may include one or more of polyvinylidene fluoride (PVDF), polytetrafluoroethylene (PTFE), vinylidene fluoridetetrafluoroethylene-propylene terpolymer, vinylidene fluoride-hexafluoropropylenetetrafluoroethylene terpolymer, tetrafluoroethylene-hexafluoropropylene copolymer, and fluoroacrylate resin.

In some embodiments, the positive electrode current collector can be a metal foil or a composite current collector. As an example of the metal foil, an aluminum foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The positive electrode active material layer is usually formed by coating the positive electrode current collector with a positive electrode slurry, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

[Electrolyte]

The electrolyte functions to conduct active ions between the positive electrode plate and the negative electrode plate. There is no particular restriction on the type of the electrolyte in the present application and it may be chosen according to actual demand. For example, the electrolyte may comprise one or more selected from a solid electrolyte and a liquid electrolyte i.e. an electrolytic solution.

In some embodiments, an electrolytic solution is used as the electrolyte and the electrolytic solution includes an electrolyte salt and an organic solvent.

When the secondary battery of the present application is a lithium ion battery, as an example, the electrolyte salt may comprise one or more of lithium hexafluorophosphate ($LiPF_6$), Lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulphonylimide (LiTFSI), lithium trifluoromethanesulfonate (LiTFS), lithium difluoro-oxalate borate (LiDFOB), lithium dioxalate borate (LiBOB), lithium difluorophosphate ($LiPO_2F_2$), lithium difluorobioxalate phosphate (LiDFOP), and lithium tetrafluorooxalate phosphate (LiTFOP).

When the secondary battery of the present application is a sodium ion battery, as an example, the electrolyte salt may comprise one or more of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bis(fluorosulfonyl)imide (NaFSI), sodium bistrifluoromethanesulphonylimide (NaTFSI), sodium trifluoromethanesulfonate (NaTFS), sodium difluoro-oxalate borate (NaDFOB), sodium dioxalate borate (NaBOB), sodium difluorophosphate ($NaPO_2F_2$), sodium difluorobioxalate phosphate (NaDFOP), and sodium tetrafluorooxalate phosphate (NaTFOP).

There is no particular restriction on the type of the solvent and it may be chosen according to demand. In some embodiments, as an example, the solvent may comprise one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoro ethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), cyclobutane sulfone (SF), dimethyl sulfone (MSM), methyl ethyl sulfone (EMS), and diethyl sulfone (ESE).

In some embodiments, the electrolytic solution may further include an additive. For example, the additive may comprise a negative electrode film-forming additive or a positive electrode film-forming additive, and may further comprise additives capable of improving certain properties of batteries, such as additives capable of improving the overcharging performance of batteries, additives capable of improving the high temperature performance of batteries, additives capable of improving the low temperature power performance of batteries, and the like.

[Separator]

In those secondary batteries using an electrolytic solution, and in some secondary batteries using a solid electrolyte, a separator is further included. The separator is provided between the positive electrode plate and the negative electrode plate, which mainly serves to prevent the positive electrode and the negative electrode from short-circuiting, while allowing active ions to pass through. There is no particular limitation on the type of the separator in the present application. The separator may be any known porous separator with good chemical and mechanical stability. The separator may be a single-layer thin film or a multi-layer composite film. When the separator is a multi-layer composite film, materials of various layers may be the same or different.

In some embodiments, the separator may comprise a base film and an optional protective coating. The base film may comprise a nonwoven, film or composite film having a porous structure, and materials of the base film comprises one or more of polyethylene, polypropylene, polyvinylidene difluoride, polyethylene terephthalate and polyimide.

The base film may or may not be provided with a protective coating on its surface. In some embodiments, a protective coating is provided on at least one surface of the base film, and the protective coating may be a polymer layer or an inorganic material layer or a layer formed by blending a polymer with an inorganic material.

The inorganic layer comprises inorganic particles and a binder, and the inorganic particles include, but are not limited to, one or more of alumina, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide and barium sulfate.

The polymer layer comprises a polymer, and the polymer comprises, but not limited to, one or more of polyamide, polyacrylonitrile, acrylate polymers, polyacrylic acid, polyacrylate salts, polyvinyl pyrrolidone, polyvinyl ether, and polyvinylidene difluoride.

In some embodiments, the positive electrode plate, the separator and the negative electrode plate may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard housing, such as a hard plastic housing, an aluminum housing, or a steel housing. The outer package may alternatively be a soft bag, such as a pocket type soft bag. The soft bag may be made of plastic, which may be polypropylene (PP), polybutylene terephthalate (PBT), poly(butylene succinate) (PBS), and the like.

The present application does not have particular limitation on the shape of the secondary battery. The secondary battery may be cylindrical, cuboid, or in any other shape. Fig. 2 shows a secondary battery 5 with a cuboid structure as an example.

In some embodiments, as shown in Fig. 3, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary battery according to the present application may be assembled into a battery module. The battery module may include a plurality of secondary batteries, and the specific quantity may be adjusted according to the application and capacity of the battery module.

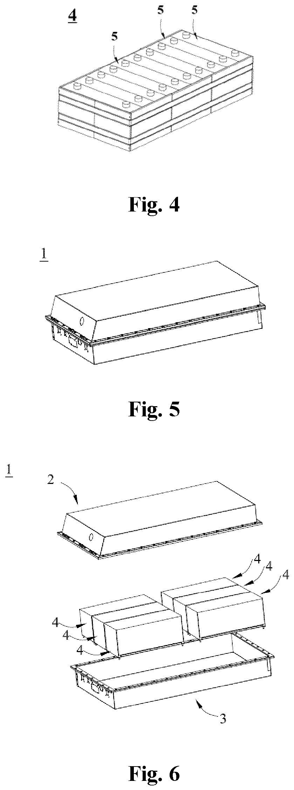

Fig. 4 is a schematic diagram of a battery module 4 as an example. As shown in Fig. 4, in the battery module 4, a plurality of secondary batteries 5 may be arranged in sequence along a length of the battery module 4. Of course, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and the quantity of the battery module included in the battery pack may be adjusted according to the application and capacity of the battery pack.

Fig. 5 and Fig. 6 are schematic diagrams of a battery pack 1 as an example. As shown in Fig. 5 and Fig. 6, the battery pack 1 may include a battery box and a plurality of battery modules 4 disposed in the battery box. The battery box includes an upper box body 2 and a lower box body 3. The upper box body 2 is used to close the lower box body 3 to form a closed space for accommodating the battery modules 4. A plurality of battery modules 4 may be arranged in the battery box in any manner.

**Electrical device**

The present application further provides an electrical device, which includes at least one of the secondary battery, the battery module, or the battery pack of the present application. The secondary battery, the battery module, and the battery pack may be used as a power supply of the electrical device or as an energy storage unit of the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

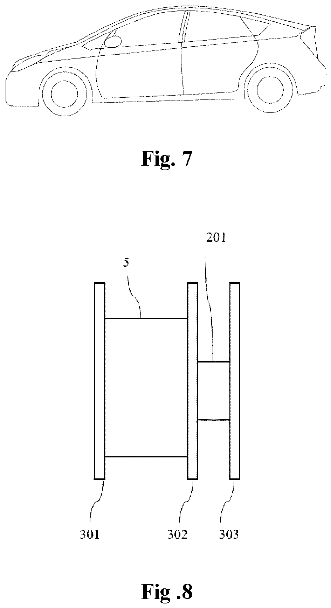

Fig. 7 is a schematic diagram of an electrical device as an example. The electrical device is a pure electric vehicle, a hybrid electric vehicle, a plug-in hybrid electric vehicle, or the like. In order to meet requirements of the electrical device for high power and high energy density, the battery pack or the battery module may be used.

As another example, the electrical device may be a mobile phone, a tablet computer, a notebook computer, or the like. The electrical device is generally required to be thin and light, so the secondary battery may be used as a power supply.

**Examples**

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

**Example 1-1**

1. Preparation of a positive electrode plate

97 wt% of $LiFePO_4$ as a positive electrode active material, 1 wt% of carbon black (Super P) as a conductive agent, and 2 wt% of polyvinylidene fluoride (PVDF) as a binder were fully mixed in an appropriate amount of solvent NMP to form a uniform positive electrode slurry; and the positive electrode slurry was uniformly applied to a surface of the positive electrode current collector aluminum foil followed by drying and cold pressing to obtain a positive electrode plate.

2. Preparation of a negative electrode plate

96.99 wt% of graphite as a negative electrode active material, 1.8 wt% of styrene butadiene rubber (SBR) as a binder, 1.2 wt% of carboxymethyl cellulose sodium (CMC) as a dispersant were fully mixed in an appropriate amount of solvent deionized water, and then 0.01 wt% of amorphous hollow carbon spheres was added with stirring homogenously to form a negative electrode slurry; and the negative electrode slurry was applied to a surface of the negative electrode current collector copper foil followed by drying and cold pressing to obtain a negative electrode plate.

3. Preparation of an electrolytic solution

Ethylene carbonate (EC), methyl ethyl carbonate (MEC) and diethyl carbonate (DEC) were mixed at a volume ratio of 1:1:1 to obtain an organic solvent. Subsequently, sufficiently dried $LiPF_6$ was dissolved in the above organic solvent to formulate an electrolytic solution with a concentration of 1 mol/L.

4. Preparation of a separator

A porous polyethylene film was used as the separator.

5. Preparation of a secondary battery

The positive electrode plate, the separator, and the negative electrode plate were stacked and wound in sequence to obtain an electrode assembly; and the electrode assembly was placed in an outer package housing and dried, then the electrolytic solution was injected, followed by vacuum packaging, standing, formation, shaping, and capacity and other processes, thereby obtaining a secondary battery.

Examples 1-2 to 1-9

The secondary batteries in Examples 1-2 to 1-9 were manufactured by a similar method to Example 1-1, with the difference from Example 1-1 that the preparation parameters of the negative electrode plate were different, which were detailed in Table 1, and the amount of binder and dispersant added was kept constant in the preparation of the negative electrode plate.

**Comparative Example 1-1**

The secondary batteries in Comparative Example 1-1 was manufactured by a similar method to Example 1-1, with the difference from Example 1-1 that the preparation parameters of the negative electrode plate were different.
97.1 wt% of graphite as a negative electrode active material, 1.8 wt% of styrene butadiene rubber (SBR) as a binder, 0.7 wt% of carboxymethyl cellulose sodium (CMC) as a dispersant and 0.4 wt% of carbon black (Super P) as a conductive agent were mixed in an appropriate amount of solvent deionized water, with fully stirring homogenously to form a negative electrode slurry; and the negative electrode slurry was applied to a surface of the negative electrode current collector copper foil followed by drying and cold pressing to obtain a negative electrode plate.

**Examples 2-2 to 2-4 and Comparative Examples 2-1 to 2-2**

The secondary batteries were manufactured by a similar method to Example 1-1, with the difference from Example 1-1 that the preparation parameters of the negative electrode plate were different, which were detailed in Table 2, and the amount of binder and dispersant added was kept constant in the preparation of the negative electrode plate.

**Examples 3-1 to 3-5 and Comparative Examples 3-1 to 3-2**

The secondary batteries were manufactured by a similar method to Example 1-1, with the difference from Example 1-1 that the preparation parameters of the negative electrode plate were different, which were detailed in Table 3, and the amount of binder and dispersant added was kept constant in the preparation of the negative electrode plate.

**Examples 4-1 to 4-4**

The secondary batteries were manufactured by a similar method to Example 1-1, with the difference from Example 1-1 that the preparation parameters of the negative electrode plate were different, which were detailed in Table 4, and the amount of binder and dispersant added was kept constant in the preparation of the negative electrode plate.

**Example 5-1**

The secondary battery was manufactured by a similar method to Example 1-1, with the difference from Example 1-1 that the preparation process parameters of the negative electrode plate were different.

The preparation of a first slurry: 96 wt% of graphite as a negative electrode active material, 1.8 wt% of styrene butadiene rubber (SBR) as a binder, 1.2 wt% of carboxymethyl cellulose sodium (CMC) as a dispersant were fully mixed in an appropriate amount of solvent deionized water, and then 1 wt% of amorphous hollow carbon spheres (same as that of Example 1-1) was added with stirring homogenously to form a first slurry.

The preparation of a second slurry: 96 wt% of graphite as a negative electrode active material, 1.8 wt% of styrene butadiene rubber (SBR) as a binder, 1.2 wt% of carboxymethyl cellulose sodium (CMC) as a dispersant were fully mixed in an appropriate amount of solvent deionized water, and then 1 wt% of amorphous hollow carbon spheres (same as that of Example 1-1) was added with stirring homogenously to form a second slurry.

The preparation of a third slurry: 95.4 wt% of graphite as a negative electrode active material, 1.8 wt% of styrene butadiene rubber (SBR) as a binder, 1.2 wt% of carboxymethyl cellulose sodium (CMC) as a dispersant were fully mixed in an appropriate amount of solvent deionized water, and then 1.6 wt% of amorphous hollow carbon spheres (same as that of Example 1-1) was added with stirring homogenously to form a third slurry.

As shown in FIG. 1, the first slurry, the second slurry, and the third slurry were applied onto a first region, a second region, and a third region of the negative electrode current collector copper foil, respectively, in a single synchronized coating process, and the negative electrode plate was obtained after drying and cold pressing. After drying, a first portion of the negative electrode active material layer was formed from the first slurry, a second portion of the negative electrode active material layer was formed from the second slurry and a third portion of the negative electrode active material layer was formed from the third slurry.

**Examples 5-2 to 5-6**

The secondary batteries were manufactured by a similar method to Example 5-1, with the difference from Example 5-1 that the preparation parameters of the negative electrode plate were different, which were detailed in Table 5, and the amount of binder and dispersant added was kept constant in the preparation of the negative electrode plate.

**Test section**

(1) Test of thickness d of shell wall of the additive, volume $V_h$ of cavity of the additive, and volume $V_w$ of the additive.

A circular sample of 0.5 cm in diameter was cut from the above prepared negative electrode plate, and a TEM image was obtained through a transmission electron microscope (abbreviated as TEM) for the cross-section thereof, from which thicknesses of shell wall of the additive and volume particle sizes of the additive were counted in the imaged area to obtain a cumulative distribution curve of the thicknesses of the shell wall of the additive and the volume particle sizes of the additive. The thickness corresponding to a percentage of 50% on the cumulative distribution curve was denoted as the thickness d of the shell wall of the additive, and the volume particle size corresponding to a percentage of 50% on the cumulative distribution curve was denoted as the volume particle size Dv50 of the additive. According to the formula for an ideal sphere and taking the above obtained volume particle size Dv50 as a diameter, the volume $V_w$ of the additive was obtained through calculation based on the formula $V_w = (4/3) \times \pi \times (Dv50/2)^3$, and the volume Vh of the cavity of the additive $V_h = (4/3) \times \pi \times (Dv50/2-d)^3$. The testing instrument can be a Mastersizer 3000 laser particle size analyzer from Malvern Instruments Ltd, UK.

(2) Porosity test of the negative electrode plate

The negative active material layer on one side of the negative electrode current collector was wiped off and then the resulting negative electrode plate was punched and cut into a small circular sample of a certain area, and then an apparent volume $V_1$ of the negative electrode plate was calculated. With reference to GB/T24586-2009, a true volume $V_2$

of the negative electrode plate was measured by a true density tester with inert gases (e.g., helium or nitrogen) as a medium, via a gas displacement. The porosity of the negative electrode plate was calculated by the formula of $(V_1-V_2)/V_1\times100\%$. Multiple samples (e.g., 30 slices) of the negative electrode plate having a good appearance with no powder off on the edge can be taken for testing, and the results are averaged, thereby improving accuracy of the test results. The testing instrument can be a Micromeritics AccuPyc II 1340 true density tester.

(3) Area test of the single-layer negative electrode plate

The area of the single-layer negative electrode plate = perimeter of the coil $\times$ 0.5 $\times$ a width of the negative electrode plate.

(4) Initial capacity $C_0$ test of the secondary battery

At 25°C, the secondary battery was charged to 3.65V with 1C constant current, and then the secondary battery was discharged to 2.5V with 1C constant current after 30 minutes of resting, which was a charging and discharging cycle, and the discharge capacity at the moment was recorded as an initial capacity $C_0$ of the secondary battery.

(5) Cycle performance test of the secondary battery

At 25°C, the secondary battery was charged to 3.65V with 1C constant current, and then the secondary battery was discharged to 2.5V with 1C constant current after 30 minutes of resting, which was a charging and discharging cycle, and the discharge capacity at the moment was recorded as the initial capacity of the secondary battery. The secondary battery was subjected to the above charging and discharging cycles, and the discharge capacity for each cycle was recorded until the discharge capacity of the secondary battery decayed to 80% of the initial capacity of the secondary battery and then the number of cycles was recorded.

(6) Thickness rebound rate test of the negative electrode active material layer

$\varepsilon$ was a thickness rebound rate of the third portion of the negative electrode active material layer when a capacity of the secondary battery decayed to 80% of the initial capacity of the secondary battery, $\varepsilon = (H'-H)/H$.
$\varepsilon_1$ was a thickness rebound rate of the first portion of the negative electrode active material layer when a capacity of the secondary battery decayed to 80% of the initial capacity of the secondary battery, $\varepsilon_1 = (H_1'-H_1)/H_1$.
$\varepsilon_2$ was a thickness rebound rate of the second portion of the negative electrode active material layer when a capacity of the secondary battery decayed to 80% of the initial capacity of the secondary battery, $\varepsilon_2 = (H_2'-H_2)/H_2$.
H', $H_1'$ and $H_2'$ were the thicknesses of the third portion, first portion and second portion of the negative electrode active material layer of the secondary battery when a capacity of the secondary battery decayed to 80% of the initial capacity of the secondary battery, and were tested according to the following method. At 25°C, the secondary battery was charged to 3.65V with 1C constant current, and then the secondary battery was discharged to 2.5V with 1C constant current after 30 minutes of resting, which was a charging and discharging cycle, and the discharge capacity at the moment was recorded as an initial capacity of the secondary battery. The secondary battery would be subjected to the above charging and discharging cycle, and the discharge capacity for each cycle was recorded until the discharge capacity of the secondary battery decayed to 80% of the initial capacity of the secondary battery. The resulting secondary battery was disassembled to obtain its negative electrode plate, and the negative electrode plate was immersed in an organic solvent (e.g. dimethyl carbonate) for a certain period of time (e.g. more than 72h), and then the negative electrode plate was taken out and dried at a certain temperature and time (e.g., vacuum oven at 80°C for more than 6h), and then the thicknesses of the third portion, the first portion, and the second portion of the negative electrode active material layer were tested, respectively.
H, $H_1$ and $H_2$ were the initial thicknesses of the third portion, the first portion and the second portion of the negative electrode active material layer, respectively, and in each Example and comparative Example of the present application, H, $H_1$ and $H_2$ were the thicknesses of the negative electrode active material layer after cold pressing, i.e., 70 $\mu$m.

(7) Expansion force test of the secondary battery

At 25°C, the secondary battery was charged to 3.65V with 1C constant current, and then the secondary battery was discharged to 2.5V with 1C constant current after 30 minutes of resting, which was a charging and discharging cycle, and the discharge capacity at the moment was recorded as an initial capacity of the secondary battery. The secondary battery was subjected to the above charging and discharging cycles, and the discharge capacity for each cycle was recorded until the discharge capacity of the secondary battery decayed to 80% of the initial capacity of the secondary battery. During the cycles, as shown in FIG. 8, the secondary battery 5 was placed between the steel plate 301 and the steel plate 302, and the force sensor 201 was placed between the steel plate 302 and the steel plate 303, to monitor the expansion force when the discharge capacity of the secondary battery decayed to 80% of the initial capacity of the secondary battery. The results were shown in Tables 1 through 6.

As shown by combining the test results in Tables 1 to 6, when the additive satisfying $20\,nm \leq d \leq 300\,nm$ and $40\% \leq V_h/V_w \leq 90\%$ is added to the negative electrode plate, it is possible to realize an effective reduction of the expansion force of the secondary battery and an improvement of the safety performance of the secondary battery under the premise that the amount of the additive is relatively small and the energy density is not affected. Optionally, the amount of the additive is 0.01 wt%-3 wt%, more optionally 0.1 wt%-2 wt%. If the amount of the additive continues to increase, the further reduction of the expansion force of the secondary battery is poorer, which is unfavorable for the energy density of the secondary battery.

As further shown by combining the test results in Tables 1 to 6, when the secondary battery satisfies $100 \leq K \leq 30000$, optionally $120 \leq K \leq 8000$, the secondary battery may have a smaller expansion force.

As shown by combining the test results of Examples 2-1 to 2-4 and Comparative Examples 2-1 to 2-2, Examples 3-1 to 3-5 and Comparative Examples 3-1 to 3-2, when the thickness d of the shell wall of the additive is less than 20 nm, the volume ratio $V_h/V_w$ of the cavity of the additive is greater than 90%, the thickness d of the shell wall of the additive is greater than 300 nm, and the volume ratio $V_h/V_w$ of the cavity of the additive is less than 40%, the expansion force of the secondary battery cannot be reduced effectively.

As further by combining the test results of Examples 2-1 to 2-4 and Examples 3-1 to 3-5, in the event that the same amount of the additive is used, the secondary battery can have a smaller expansion force when the volume ratio $V_h/V_w$ of the cavity of the additive further satisfies $60\% \leq V_h/V_w \leq 90\%$, and optionally, $70\% \leq V_h/V_w \leq 89\%$.

As shown by combining the test results of Example 2-1 and Examples 4-1 to 4-4, in the event that the volume ratio $V_h/V_w$ of the cavity of the additive and the thickness of the shell wall are close to each other, and the amount of the additive is the same, the additive having a volume particle size of greater than $0.8\,\mu m$, optionally $0.85\,\mu m$-$5\,\mu m$, and more optionally $1\,\mu m$-$2.5\,\mu m$ is more conducive to lowering the expansion force of the secondary battery and is conducive to improving the cycle performance of the secondary battery.

As shown by combining the test results of Example 1-3 and Example 5-5, Example 1-4 and Example 5-4, Example 1-6 and Example 5-1, Example 1-9 and Example 5-2, by further adjusting the distribution of the additive in the width direction of the negative electrode active material layer, and by adopting a high content of the additive in the third portion, and by adopting a low content of the additive in the first portion and the second portion, it is possible to realize a further reduction of the actual amount of additive in the negative electrode plate while keeping a certain expansion force of the secondary battery, whereby the energy density of the secondary battery can be further improved.

As shown by combining the test results of Example 5-2 and Example 5-3, if the amount of the additive in the third portion of the negative electrode active material layer continues to be increased on the basis of Example 5-2, the effect on improving the expansion force of the secondary battery will not be further significantly enhanced. As a result, the present application is also used as a guideline to the amount of the additive in the negative electrode plate, so that the energy density of the secondary battery may be further improved.

It should be noted that the present application is not limited to the above embodiments. The above-described embodiments are only examples, and embodiments having substantially the same composition and performing the same effect as the technical idea within the scope of the technical solution of the present application are included in the technical scope of the present application. In addition, within the scope of the present application, the present application also covers other ways of constructing the embodiments by combining some of the elements of the embodiments and applying various deformations to the embodiments that a person skilled in the art can think of without departing from the subject matter of the present application.

Table 1

| No. | Additive | | | | | Porosity $\lambda$ | Negative electrode plate | | | | Secondary battery | | |
|---|---|---|---|---|---|---|---|---|---|---|---|---|---|
| | Thickness d of shell wall (nm) | Dv50 (nm) | Volume $V_h$ of cavity (nm³) | $V_h/V_w$ | Content | | Single-layer area S (mm²) | H (µm) | H' (µm) | Thickness rebound rate $\varepsilon$ | Initial capacity $C_0$ (mAh) | K | Expansion force (N) |
| Comparative Example 1-1 | / | / | / | / | 0 | 30.50% | 20000 | 70 | 94.4 | 34.79% | 100000 | / | 31000 |
| Example 1-1 | 50 | 1000 | $3.8\times10^8$ | 72.90% | 0.01% | 30.30% | 20000 | 70 | 93.1 | 32.93% | 100000 | 1236 | 30800 |
| Example 1-2 | 50 | 1000 | $3.8\times10^8$ | 72.90% | 0.10% | 30.10% | 20000 | 70 | 92.6 | 32.29% | 100000 | 1187 | 29450 |
| Example 1-3 | 50 | 1000 | $3.8\times10^8$ | 72.90% | 0.50% | 29.95% | 20000 | 70 | 92.2 | 31.71% | 100000 | 1144 | 28700 |
| Example 1-4 | 50 | 1000 | $3.8\times10^8$ | 72.90% | 1.00% | 29.86% | 20000 | 70 | 92.0 | 31.36% | 100000 | 1117 | 28040 |
| Example 1-5 | 50 | 1000 | $3.8\times10^8$ | 72.90% | 1.50% | 29.78% | 20000 | 70 | 91.6 | 30.86% | 100000 | 1081 | 27180 |
| Example 1-6 | 50 | 1000 | $3.8\times10^8$ | 72.90% | 2.00% | 29.72% | 20000 | 70 | 91.5 | 30.64% | 100000 | 1066 | 26250 |
| Example 1-7 | 50 | 1000 | $3.8\times10^8$ | 72.90% | 2.50% | 29.56% | 20000 | 70 | 91.2 | 30.29% | 100000 | 1040 | 25580 |
| Example 1-8 | 50 | 1000 | $3.8\times10^8$ | 72.90% | 3.00% | 29.45% | 20000 | 70 | 91.0 | 30.00% | 100000 | 1019 | 25240 |
| Example 1-9 | 50 | 1000 | $3.8\times10^8$ | 72.90% | 3.50% | 29.34% | 20000 | 70 | 90.8 | 29.71% | 100000 | 999 | 24960 |

Table 2

| No. | Additive | | | | | Negative electrode plate | | | | | Secondary battery | | |
|---|---|---|---|---|---|---|---|---|---|---|---|---|---|
| | thickness d of shell wall (nm) | Dv50 (nm) | Volume $V_h$ of cavity (nm$^3$) | $V_h/V_w$ | Content | Porosity $\lambda$ | Single-layer area S (mm$^2$) | H ($\mu$m) | H' ($\mu$m) | Thickness rebound rate $\varepsilon$ | Initial capacity $C_0$ (mAh) | K | Expansion force(N) |
| Example 2-1 | 25 | 1000 | $4.5\times10^8$ | 85.74% | 2.00% | 30.11% | 20000 | 70 | 91.8 | 31.14% | 100000 | 138 | 27043 |
| Example 2-2 | 40 | 1000 | $4.1\times10^8$ | 77.87% | 2.00% | 30.00% | 20000 | 70 | 91.6 | 30.86% | 100000 | 555 | 26742 |
| Example 2-3 | 55 | 1000 | $3.7\times10^8$ | 70.50% | 2.00% | 29.87% | 20000 | 70 | 90.3 | 29.00% | 100000 | 1272 | 25823 |
| Example 2-4 | 100 | 1000 | $2.7\times10^8$ | 51.20% | 2.00% | 29.68% | 20000 | 70 | 92.0 | 31.36% | 100000 | 8926 | 27203 |
| Comparative Example 2-1 | 15 | 1000 | $4.8\times10^8$ | 91.27% | 2.00% | 30.25% | 20000 | 70 | 92.8 | 32.50% | 100000 | 32 | 29861 |
| Comparative Example 2-2 | 150 | 1000 | $1.8\times10^8$ | 34.30% | 2.00% | 29.60% | 20000 | 70 | 92.8 | 32.50% | 100000 | 32340 | 28324 |

Table 3

| No. | Additive | | | | | Negative electrode plate | | | | | Secondary battery | | |
|---|---|---|---|---|---|---|---|---|---|---|---|---|---|
| | thickness d of shell wall (nm) | Dv50 (nm) | Volume $V_h$ of cavity (nm$^3$) | $V_h/V_w$ | Content | Porosity $\lambda$ | Single-layer area S (mm$^2$) | H ($\mu$m) | H' ($\mu$m) | Thickness rebound rate $\varepsilon$ | Initial capacity $C_0$ (mAh) | K | Expansion force(N) |
| Example 3-1 | 50 | 2500 | $7.2\times10^9$ | 88.47% | 2.00% | 30.01% | 20000 | 70 | 91.4 | 30.50% | 100000 | 1058 | 27202 |
| Example 3-2 | 80 | 2500 | $6.7\times10^9$ | 82.00% | 2.00% | 29.95% | 20000 | 70 | 90.8 | 29.64% | 100000 | 4092 | 24935 |
| Example 3-3 | 100 | 2500 | $6.4x10^9$ | 77.87% | 2.00% | 29.85% | 20000 | 70 | 90.6 | 29.36% | 100000 | 7834 | 24358 |
| Example 3-4 | 150 | 2500 | $5.6\times10^9$ | 68.15% | 2.00% | 29.76% | 20000 | 70 | 91.9 | 31.29% | 100000 | 30000 | 28102 |
| Example 3-5 | 300 | 2500 | $3.6\times10^9$ | 43.90% | 2.00% | 29.62% | 20000 | 70 | 92.1 | 31.50% | 100000 | 243083 | 28697 |
| Comparative Example 3-1 | 15 | 2500 | $7.9\times10^9$ | 96.44% | 2.00% | 30.12% | 20000 | 70 | 92.2 | 31.64% | 100000 | 16 | 29503 |
| Comparative Example 3-2 | 325 | 2500 | $3.3\times10^9$ | 40.52% | 2.00% | 29.58% | 20000 | 70 | 92.7 | 32.43% | 100000 | 327448 | 29654 |

Table 4

| No. | Additive | | | | | negative electrode plate | | | | | Secondary battery | | | |
|---|---|---|---|---|---|---|---|---|---|---|---|---|---|---|
| | Thickness d of shell wall (nm) | Dv50 (nm) | Volume $V_h$ of cavity (nm³) | $V_h/V_w$ | Content | Porosity $\lambda$ | Single-layer area S (mm²) | H (μm) | H' (μm) | Thickness rebound rate $\varepsilon$ | Initial capacity $C_0$ (mAh) | K | Expansion force(N) | Cycle number |
| Comparative Example 1-1 | / | / | / | / | 0 | 30.50% | 20000 | 70 | 94.4 | 34.79% | 100000 | / | 31000 | 1467 |
| Example 2-1 | 25 | 1000 | $4.5 \times 10^8$ | 85.74% | 2.00% | 30.11% | 20000 | 70 | 91.8 | 31.14% | 100000 | 138 | 27043 | 1550 |
| Example 4-1 | 40 | 1500 | $1.5 \times 10^9$ | 84.84% | 2.00% | 30.12% | 20000 | 70 | 91.0 | 29.93% | 100000 | 522 | 25346 | 1574 |
| Example 4-2 | 50 | 1800 | $2.6 \times 10^9$ | 84.24% | 2.00% | 30.05% | 20000 | 70 | 90.6 | 29.43% | 100000 | 985 | 24628 | 1592 |
| Example 4-3 | 20 | 800 | $2.3 \times 10^8$ | 85.74% | 2.00% | 29.96% | 20000 | 70 | 92.8 | 32.50% | 100000 | 77 | 29154 | 1515 |
| Example 4-4 | 20 | 600 | $9.2 \times 10^7$ | 81.30% | 2.00% | 29.87% | 20000 | 70 | 93.1 | 33.00% | 100000 | 79 | 30765 | 1507 |

Table 5

| No. | Porosity λ of the negative electrode plate | Single-layer area S of the negative electrode plate (mm²) | First portion of the negative electrode active material layer | | | | Second portion of the negative electrode active material layer | | | | Third portion of the negative electrode active material layer | | | |
|---|---|---|---|---|---|---|---|---|---|---|---|---|---|---|
| | | | Content $w_1$ of Additive | $H_1$ (μm) | $H_1'$ (μm) | Thickness rebound rate $\varepsilon_1$ | Content $W_2$ of Additive | $H_2$ (μm) | $H_2'$ (μm) | Thickness rebound rate $\varepsilon_2$ | Content $w_3$ of Additive | $H$ (μm) | $H'$ (μm) | Thicknes s rebound rate $\varepsilon$ |
| Example 5-1 | 29.67% | 20000 | 1.00% | 70 | 89.7 | 28.14% | 1.00% | 70 | 89.6 | 28.00% | 1.60% | 70 | 91.2 | 30.29% |
| Example 5-2 | 29.57% | 20000 | 1.00% | 70 | 89.7 | 28.14% | 1.00% | 70 | 89.6 | 28.00% | 2.00% | 70 | 90.9 | 29.86% |
| Example 5-3 | 29.37% | 20000 | 1.00% | 70 | 89.7 | 28.14% | 1.00% | 70 | 89.6 | 28.00% | 5.00% | 70 | 90.3 | 28.93% |
| Example 5-4 | 29.87% | 20000 | 0.30% | 70 | 90.6 | 29.43% | 0.30% | 70 | 90.7 | 29.57% | 1.00% | 70 | 91.8 | 31.14% |
| Example 5-5 | 29.97% | 20000 | 0.15% | 70 | 91.5 | 30.64% | 0.15% | 70 | 91.6 | 30.86% | 0.50% | 70 | 92.2 | 31.64% |
| Example 5-6 | 30.07% | 20000 | 0 | 70 | 93.4 | 33.43% | 0 | 70 | 93.4 | 33.43% | 0.20% | 70 | 93.1 | 32.93% |

Table6

| No. | Secondary battery | | | | | | | | |
|---|---|---|---|---|---|---|---|---|---|
| | initial capacity $C_0$ (mAh) | $w_1/w_3$ | $w_2/w_3$ | $K_1$ | $K_2$ | K | $K_1/K$ | $K_2/K$ | Expansion force(N) |
| Example 5-1 | 100000 | 0.63 | 0.63 | 899 | 890 | 1041 | 0.86 | 0.85 | 26000 |
| Example 5-2 | 100000 | 0.50 | 0.50 | 898 | 889 | 1011 | 0.89 | 0.88 | 24653 |
| Example 5-3 | 100000 | 0.20 | 0.20 | 897 | 887 | 947 | 0.95 | 0.94 | 24020 |
| Example 5-4 | 100000 | 0.30 | 0.30 | 984 | 994 | 1102 | 0.89 | 0.90 | 27800 |
| Example 5-5 | 100000 | 0.30 | 0.30 | 1068 | 1083 | 1139 | 0.94 | 0.95 | 28500 |
| Example 5-6 | 100000 | 0 | 0 | 1272 | 1272 | 1234 | 1.03 | 1.03 | 29150 |

**Claims**

1. A negative electrode plate comprising a negative electrode current collector and a negative electrode active material layer provided on the negative electrode current collector, wherein the negative electrode active material layer comprises a negative electrode active material and an additive, the additive comprises a shell wall and a cavity located on an inner side of the shell wall, a thickness of the shell wall is denoted as d, a volume of the cavity is denoted as $V_h$, a volume of the additive is denoted as $V_w$, and the additive satisfies $20nm \leq d \leq 300nm$ and $40\% \leq V_h/V_w \leq 90\%$.

2. The negative electrode plate as claimed in claim 1, wherein

   $25\ nm \leq d \leq 200\ nm$, optionally, $40\ nm \leq d \leq 120\ nm$; and/or
   $60\% \leq V_h/V_w \leq 90\%$, optionally, $70\% \leq V_h/V_w \leq 89\%$.

3. The negative electrode plate as claimed in claim 1 or 2, wherein the thickness d of the shell wall of the additive, the volume $V_h$ of the cavity of the additive, and the volume $V_w$ of the additive all are tested and obtained by a method in which a circular sample of 0.5 cm in diameter is cut from the negative electrode plate, and a TEM image is obtained through a transmission electron microscope for the cross-section thereof, from which thicknesses of shell wall of the additive and volume particle sizes of the additive are counted in the region to obtain a cumulative distribution curve of the thicknesses of the shell wall of the additive and the volume particle sizes of the additive in which the thickness corresponding to a percentage of 50% on the cumulative distribution curve is denoted as the thickness d of the shell wall of the additive, and the volume particle size corresponding to a percentage of 50% on the cumulative distribution curve is denoted as the volume particle size Dv50 of the additive, and according to an ideal sphere formula and taking the above obtained volume particle size Dv50 as a diameter, the volume $V_w$ of the additive is obtained through calculation based on the formula $V_w = (4/3) \times \pi \times (Dv50/2)^3$, and the volume $V_h$ of the cavity of the additive $V_h = (4/3) \times \pi \times (Dv50/2-d)^3$.

4. The negative electrode plate as claimed in any one of claims 1 to 3, wherein

   the additive comprises one or more selected from hollow spheres and hollow polyhedrons, optionally comprises hollow spheres; and/or
   the additive has a Dv50 volume particle size of from 0.85 $\mu$m to 5 $\mu$m, optionally from 1 $\mu$m to 2.5 $\mu$m; and/or
   the additive has a volume particle size satisfying $0.5 \leq (Dv90-Dv10)/Dv50 \leq 8$, optionally, $2 \leq (Dv90-Dv10)/Dv50 \leq 5$.

5. The negative electrode plate as claimed in any one of claims 1 to 4, wherein the additive comprises hollow carbon spheres, optionally comprising one or more selected from amorphous hollow carbon spheres, graphitized hollow carbon spheres and hollow graphene spheres.

6. The negative electrode plate as claimed in any one of claims 1 to 5, wherein based on a total weight of the negative electrode active material layer, the additive is present in a weight percent content of from 0.01 wt% to 3 wt%, optionally from 0.1 wt% to 2 wt%.

7. The negative electrode plate as claimed in any one of claims 1 to 6, wherein the negative electrode active material layer comprises a first portion and a second portion located on the edge side and a third portion located between the first portion and the second portion along a width direction of the negative electrode active material layer, and a total width of the negative electrode active material layer is W in which the first portion has a width of 1/5 W, the second portion has a width of 1/5 W, the third portion has a width of 3/5 W, the additive in the first portion is present in a weight percent content of $w_1$, the additive in the second portion is present in a weight percent content of $w_2$, and the additive in the third portion is present in a weight percent content of $w_3$, and $0 \leq w_1/w_3 < 1$, and $0 \leq w_2/w_3 < 1$.

8. The negative electrode plate as claimed in claim 7, wherein

$0 < w_1/w_3 \leq 0.7$, optionally, $0 < w_1/w_3 \leq 0.5$; and/or
$0 < w_2/w_3 \leq 0.7$, optionally, $0 < w_2/w_3 \leq 0.5$.

9. The negative electrode plate as claimed in claim 7 or 8, wherein

$0wt\% \leq w_1 \leq 2wt\%$, optionally, $0wt\% < w_1 \leq 1wt\%$; and/or
$0wt\% \leq w_2 \leq 2wt\%$, optionally, $0wt\% < w_2 \leq 1wt\%$; and/or
$0.01wt\% \leq w_3 \leq 5wt\%$, optionally, $0.01wt\% \leq w_3 \leq 2wt\%$.

10. The negative electrode plate as claimed in any one of claims 7 to 9, wherein $w_1 = w_2$.

11. The negative electrode plate as claimed in any one of claims 1 to 10, wherein the negative electrode active material is present in a weight percent content of from 95wt% to 99wt% based on the total weight of the negative electrode active material layer.

12. The negative electrode plate as claimed in any one of claims 1 to 11, wherein the negative electrode active material layer further comprises a negative electrode binder and/or a negative electrode dispersant,

optionally, the negative electrode binder is present in a weight percent content of from 1 wt% to 2.5 wt% based on the total weight of the negative electrode active material layer;
optionally, the negative electrode dispersant is present in a weight percent content of from 0.5wt% to 1.5wt% based on the total weight of the negative electrode active material layer.

13. The negative electrode plate as claimed in any one of claims 1 to 12, wherein the negative electrode active material layer further comprises a negative electrode conductive agent, optionally the negative electrode conductive agent is present in a weight percent content of from 0wt% to 1.5wt% based on the total weight of the negative electrode active material layer.

14. A method of preparing a negative electrode plate, comprising steps of: providing a negative electrode slurry comprising a negative electrode active material and an additive; applying the negative electrode slurry to a negative electrode current collector, and obtaining the negative electrode plate after drying and cold pressing, wherein the negative electrode plate comprises a negative electrode current collector and a negative electrode active material layer provided on the negative electrode current collector, the negative electrode active material layer comprises a negative electrode active material and an additive, the additive comprises a shell wall and a cavity located on an inner side of the shell wall, and a thickness of the shell wall is denoted as d, a volume of the cavity is denoted as $V_h$, a volume of the additive is denoted as $V_w$, and the additive satisfies $20nm \leq d \leq 300nm$ and $40\% \leq V_h/V_w \leq 90\%$.

15. The method as claimed in claim 14, wherein the negative electrode current collector comprises a first region and a second region located on the edge side and a third region located between the first region and the second region along a width direction of the negative electrode current collector, and the negative electrode current collector has a total coating width of W in which the first region has a coating width of 1/5 W, the second region has a coating width of 1/5 W, the third region has a coating width of 3/5 W, and in the method of preparing the negative electrode plate, the negative electrode slurry is formulated to comprise a first slurry, a second slurry and a third slurry and the first slurry, the second slurry and the third slurry are applied to the first region, the second region and the third region of the negative electrode current collector, respectively and then dried to form a first portion, a second portion and a third portion of the negative electrode active material layer in which the additive in the first portion is present in a weight percent content of $w_1$, the additive in the second portion is present in a weight percent content of $w_2$, and the additive in the third portion is present in a weight percent content of $w_3$, and $0 \leq w_1/w_3 < 1$, and $0 \leq w_2/w_3 < 1$,

optionally, the first slurry, the second slurry and the third slurry are applied by a single synchronized coating process or by a multiple stepwise coating process.

16. A secondary battery comprising a negative electrode plate as claimed in any one of claims 1 to 13, or a negative electrode plate obtained by the method as claimed in any one of claims 14 to 15.

17. The secondary battery as claimed in claim 16, wherein the secondary battery satisfies $100 \leq K \leq 30000$, optionally $120 \leq K \leq 8000$, with

$$K = \frac{(1 + \lambda) \times \varepsilon^2 \times [(d^3 \times S \times \frac{H}{1000} - \left(\frac{V_h}{d^3}\right)]}{C_0 \times (1 - 80\%)}$$

in which

$\lambda$ is a porosity of the negative electrode plate;
$\varepsilon$ is a thickness rebound rate of the third portion of the negative electrode active material layer when a capacity of the secondary battery decays to 80% of an initial capacity of the secondary battery;
$C_0$ is an initial capacity of the secondary battery in mAh;
d is the thickness of the shell wall of the additive in nm;
$V_h$ is the volume of the cavity of the additive in $nm^3$;
S is an area of the single-layer negative electrode plate in $mm^2$;
H is an initial thickness of the third portion of the negative electrode active material layer in $\mu m$.

18. The secondary battery as claimed in claim 17, wherein the secondary battery satisfies at least one of

(1) $20\% \leq \lambda \leq 50\%$, optionally $23\% \leq \lambda \leq 35\%$;
(2) $20\% \leq \varepsilon \leq 40\%$, optionally, $25\% \leq \varepsilon \leq 35\%$;
(3) $20$ nm $\leq d \leq 300$ nm, optionally, $40$ nm $\leq d \leq 120$ nm;
(4) $1 \times 10^7$ $nm^3 \leq V_h \leq 1 \times 10^{12}$ $nm^3$, optionally, $2.5 \times 10^8$ $nm^3 \leq V_h \leq 1 \times 10^{10}$ $nm^3$;
(5) $1 \times 10^2 mm^2 \leq S \leq 1 \times 10^8 mm^2$, optionally, $1 \times 10^3 mm^2 \leq S \leq 1 \times 10^6 mm^2$;
(6) $10$ $\mu m \leq H \leq 250$ $\mu m$, optionally, $40$ $\mu m \leq H \leq 120$ $\mu m$.

19. The secondary battery as claimed in claim 17 or 18, wherein when a capacity of the secondary battery decays to 80% of an initial capacity of the secondary battery, a thickness rebound rate of the first portion of the negative electrode active material layer is denoted as $\varepsilon_1$, an initial thickness of the first portion of the negative electrode active material layer is denoted as $H_1$ in $\mu m$, a thickness rebound rate of the second portion of the negative electrode active material layer is denoted as $\varepsilon_2$, an initial thickness of the second portion of the negative electrode active material layer is denoted as $H_2$ in $\mu m$, and the secondary battery satisfies $0 < K_1/K \leq 1$, $0 < K_2/K \leq 1$, with

$$K_1 = \frac{(1 + \lambda) \times \varepsilon_1^2 \times [(d^3 \times S \times \frac{H_1}{1000} - \left(\frac{V_h}{d^3}\right)]}{C_0 \times (1 - 80\%)},$$

$$K_2 = \frac{(1 + \lambda) \times \varepsilon_2^2 \times [(d^3 \times S \times \frac{H_2}{1000} - \left(\frac{V_h}{d^3}\right)]}{C_0 \times (1 - 80\%)}$$

20. The secondary battery as claimed in claim 19, wherein

$$0 < K_1/K \leq 0.95;$$

and/or

$$0 < K_2/K \leq 0.95.$$

21. The secondary battery as claimed in claim 19 or 20, wherein

$100 \leq K_1 \leq 30000$, optionally $120 \leq K_1 \leq 8000$; and/or
$100 \leq K_2 \leq 30000$, optionally, $120 \leq K_2 \leq 8000$.

22. The secondary battery as claimed in any one of claims 19 to 21, wherein

$15\% \leq \varepsilon_1 \leq 35\%$, optionally, $25\% \leq \varepsilon_1 \leq 31\%$; and/or
$15\% \leq \varepsilon_2 \leq 35\%$, optionally, $25\% \leq \varepsilon_2 \leq 31\%$; and/or
$10\ \mu m \leq H_1 \leq 250\ \mu m$, optionally, $40\ \mu m \leq H_1 \leq 120\ \mu m$; and/or
$10\ \mu m \leq H_2 \leq 250\ \mu m$, optionally, $40\ \mu m \leq H_2 \leq 120\ \mu m$.

23. An electrical device comprising the secondary battery as claimed in any one of claims 16 to 22.

Fig. 1

Fig. 2

Fig. 3

**Fig. 4**

**Fig. 5**

**Fig. 6**

**Fig. 7**

**Fig .8**

## INTERNATIONAL SEARCH REPORT

| International application No. |
| --- |
| **PCT/CN2022/131829** |

| A. | CLASSIFICATION OF SUBJECT MATTER |
| --- | --- |

H01M4/62(2006.01)i; H01M4/13(2010.01)i; H01M4/139(2010.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNKI, DWPI, ENTXTC, ENTXT, CNTXT: 负极, 阳极, 中空?球, 空心??球, 半径, 内径, 壁厚, 厚度, 第二, 第三, 多个, 活性层, 宽度, 宽幅, 涂层, anode, hollow, ball, sphere, radius, inner diameter, wall, thickness, second, third, plurality, active layer, width, broadloom, coat+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107735891 A (MATSUMOTO YUSHI-SEIYAKU CO., LTD.) 23 February 2018 (2018-02-23)<br>description, paragraphs 9-253, and figures 1-3 | 1-6, 11-14, 16, 23 |
| Y | CN 107735891 A (MATSUMOTO YUSHI-SEIYAKU CO., LTD.) 23 February 2018 (2018-02-23)<br>description, paragraphs 9-253, and figures 1-3 | 7-13, 15-23 |
| Y | CN 114597335 A (ZHUHAI COSMX BATTERY CO., LTD.) 07 June 2022 (2022-06-07)<br>description, paragraphs 4-105, and figures 1-2 | 7-13, 15-23 |
| A | JP 2014194864 A (DAINIPPON PRINTING CO., LTD.) 09 October 2014 (2014-10-09)<br>entire document | 1-23 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 July 2023** | **26 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2022/131829**

| Patent document cited in search report | | | Publication date (day/month/year) | Patent family member(s) | | | Publication date (day/month/year) |
|---|---|---|---|---|---|---|---|
| CN | 107735891 | A | 23 February 2018 | KR | 20180022719 | A | 06 March 2018 |
| | | | | JPWO | 2016208480 | A1 | 01 March 2018 |
| | | | | JP | 6294570 | B2 | 14 March 2018 |
| | | | | WO | 2016208480 | A1 | 29 December 2016 |
| | | | | CN | 107735891 | B | 24 December 2021 |
| CN | 114597335 | A | 07 June 2022 | None | | | |
| JP | 2014194864 | A | 09 October 2014 | None | | | |

Form PCT/ISA/210 (patent family annex) (July 2022)

**REFERENCES CITED IN THE DESCRIPTION**

**Patent documents cited in the description**

- GB 190772016 T
- GB 245862009 T